# EUROPEAN PATENT APPLICATION

(11) **EP 1 229 074 A1**
(43) Date of publication of application: **07.08.2002**
(21) Application number: 02002278.6
(22) Date of filing: 30.01.2002
(51) Int. Cl.: C08K 11/00

(54) **Flame-retardant material and flame-retardant polymer material**

(30) Priority: 31.01.2001 JP 2001023768; 31.01.2001 JP 2001023939; 27.06.2001 JP 2001194507; 27.06.2001 JP 2001194509; 10.10.2001 JP 2001312885
(71) Applicant: Ishizuka Garasu Kabushiki Kaisha, Nagoya-shi, Aichi (JP)
(72) Inventor: Yoshida, Yoshifumi, Nagoya-shi, Aichi (JP); Oda, Tatsuaki, Nagoya-shi, Aichi (JP)
(74) Representative: TER MEER STEINMEISTER & PARTNER GbR

(57) **Abstract**

Ammonium nitrate powder **10** and aluminum hydroxide powder **39**, both of which are flame-retardant materials, are blended and kneaded with a polymer material **41** which should serve as a matrix, to thereby obtain a compound **531**. A polymer material obtained by molding such compound **531** by a predetermined molding process will have an excellent flame retardancy without being significantly modified in polymer properties thereof as compared with those before the flame-retardant material is compounded.

## Description

### Field of the Invention

The present invention relates to a flame-retardant material capable of ensuring a material composed of a resin or so an excellent flame retardancy, and to a flame-retardant polymer material.

### Description of the Background Art

Resin materials are used in a wide variety of fields and demands therefor are still growing for their desirable chemical and physical properties, and for excellent moldability and processability. Most of resin materials are however highly combustible enough to limit the application range thereof, so that there has been a strong demand for providing flame retardancy to such resin materials.

While halogen-base flame retarder has been most popular as a flame retarder for flame retarding finish for resin materials, this type of flame retarder is now understood as undesirable from an environmental viewpoint since it can generate dioxin or furan. So that there is a strong demand for development and practical application of ecological flame retarder. Also phosphorus-base flame retarder, which is of non-halogen-base, is undesirable since it can emit phosphine, a hydride of phosphorus.

There is also known inorganic flame retarder such as aluminum hydroxide and magnesium hydroxide, and in particular aluminum hydroxide enjoys a large demand of all flame retarders since it is advantageous in low hazardousness, low fuming property, electric insulation property and low cost. Such inorganic flame retarders may however degrade mechanical properties and waterproof property of the resin materials, increase viscosity of the compound due to a large amount of blending thereof (150 parts or more), and make it difficult to recycle the resin materials due to such large amount of addition. Another problem resides in that the combustion of the resin blended with such inorganic flame retarder for the purpose of disposal or so may result in a large amount of deposited combustion residue derived from such inorganic flame retarder.

It is also disadvantageous for the inorganic flame retarders that they need be mixed with other flame retarder since independent use thereof can attain only a small degree of flame retardant effect. There is also known a vitreous flame retarder using a low-melting-point glass, but problems reside in that demanding complicated production process, large amount of addition to the resin and high production cost, and in that achieving only a poor waterproof property.

It is therefore an object of the present invention to solve the foregoing problems and to provide a flame-retardant material and a flame-retardant polymer material containing thereof, both of which being aimed at achieving excellent flame retardancy at a low amount of addition to resin or so without degrading various properties of such resin, and low production of combustion residue when such resin or so is combusted for disposal.

### SUMMARY OF THE INVENTION

A flame-retardant material of the present invention proposed to solve the foregoing problems is such that being used for ensuring a target object, which mainly comprises a polymer material, flame retardancy as being dispersed therein or immobilized on the surface thereof, and wherein the flame-retardant material contains a group expressed as NₓO_{y} (where, x and y are natural numbers) and a group capable of generating water upon heating.

Such flame-retardant material containing a group expressed as NₓO_{y} (where, x and y are natural numbers) and a group capable of generating water upon heating can be compounded (added) with a target object such as resin by mixing or immobilization. When such target object is exposed to a high temperature (e.g., 500°C or above), both of a water component generating group and a nitrogen-containing, combustion-inhibitory gas generated by heating from the group expressed as NₓO_{y} (where, x and y are natural numbers) are responsible for providing the target object an excellent flame retardancy in a cooperative manner. More specifically, this successfully allows provision of flame retardancy satisfying a level from V-0 to V-2 when tested in compliance with the procedures of UL-94 combustibility test (this specification follows the fifth edition, October 26, 1996).

In one more preferred embodiment, the group expressed as NₓO_{y} (where, x and y are natural numbers) is contained in a form of a compound selected from the group consisting of nitric acid compound, nitrous acid compound and hyponitrous acid compound. More specifically, a compound selected from the group consisting of metal nitrate, nitric acid ester and ammonium nitrate is available. The metal nitrate can be exemplified by zinc nitrate hexahydrate, nickel nitrate hexahydrate, copper nitrate hexahydrate, iron nitrate nonahydrate, aluminum nitrate nonahydrate, cerium nitrate hexahydrate and ammonium cerium nitrate.

The metal nitrate or organic/inorganic nitric acid compound generates nitrogen oxide (NₓO_{y}) upon heating. Possible examples of the organic/inorganic nitric acid compound include acetyl nitrate (C₂H₃NO₄); aniline nitrate (C₆H₈N₂O₃); nitric acid esters (RONO₂) such as methyl nitrate (CH₃ONO₂), ethyl nitrate (C₂H₅ONO₂), butyl nitrate (C₄H₉ONO₂), isoamyl nitrate ((CH₃)₂CHCH₂CH₂ONO₂), isobutyl nitrate ((CH₃)₂CHCH₂ONO₂) and isopropyl nitrate ((CH₃)₂CHONO₂); ammonium nitrate (NH₄NO₃); guanidine nitrate (CH₆N₄O₃); nitroacetylcellulose; nitrocellulose; urea nitrate (HNO₃·CO(NH₂)₂); hydrazinium nitrate (N₂H₅NO₃); hydroxylammonium nitrate ([NH₃OH]NO₃) and benzendiazonium nitrate (C₆H₅N₃O₃). The nitrous acid compound is also available, and examples thereof include ammonium nitrite (NH₄NO₂); and nitrous acid esters (RONO) such as methyl nitrite (CH₃ONO), ethyl nitrite (C₂H₅ONO), propyl nitrite (C₃H₇ONO), isopropyl nitrite ((CH₃)₂CHONO), butyl nitrite (C₄H₉ONO), isobuthyl nitrite ((CH₃)₂CHCH₂ONO) and isoamyl nitrite (amyl nitrite) ((CH₃)₂CHCH₂CH₂ONO). Also the hyponitrous acid compound can be exemplified by metal salt and ammonium salt of hyponitrous ion (N₂O₂²⁻). The nitrogen compound represented by such metal nitrate, and organic/inorganic nitric acid compound is preferably used in a form of dry preparation. Non-dried preparation may degrade moldability and physical properties of the product due to lowered decomposition temperature. While the nitrogen compound is preferably used in a grain form with an average grain size of 0.01 to 100 µm, those in a form of liquid or solution are also available.

In one more preferred embodiment, the nitric acid compound, nitrous acid compound and hyponitrous acid compound are non-metallic. This desirably prevent a resin, the target substance, from being colored due to addition of the flame-retardant material. Coloring is probably ascribable to metal ion. For example, non-metallic ammonium nitrate (NH₄NO₃) is proper as the nitric salt used in the present invention since it is inexpensive and is not causative of such coloring of the target substance. In contrast, intentional use of coloring by the metal nitrate will be valuable for the case the coloring of the target substance is desired. Some of the metal nitrate have a decomposition temperature higher than that of non-metallic nitrate, so that they are advantageous in that allowing setting of the molding temperature of the resin material at a relatively higher level. It is thus recommendable to selectively use the non-metallic nitrate or metallic nitrate by purposes. Anyway such coloring by no means indicates ruining of the flame retardancy and moldability of the target object.

In one more preferred embodiment, the nitric acid compound, nitrous acid compound and hyponitrous acid compound are subjected to surface treatment for improving the affinity with the target object. The surface treatment is preferably given by using any one agent selected from the group consisting of those of Si-base, Ti-base, Al-base, olefin-base, aliphatic acid-base, oil-and-fat-base, wax-base and detergent-base. Specific examples thereof include those using silane coupling agent, titanate-base coupling agent or aluminate-base coupling agent; those using aliphatic acid such as stearic acid, oleic acid, linoleic acid, linolenic acid or eleostrearic acid; those using salt of aliphatic acid such as Ca salt or Zn salt of the foregoing aliphatic acids; those using nonionic detergent such as polyethylene glycol derivative; those using polyethylene-base or polypropylene-base wax; carboxylate-base coupling agent and phosphate-base coupling agent.

More specifically, the surface treatment may be coating with a vitreous precursor composition capable of generating vitreous ceramic upon heating onto such nitrogen compound. When the target object is exposed to a high temperature (e.g., 500°C or above), such vitreous precursor composition produces vitreous ceramic, and such vitreous ceramic serves as a protective film to thereby allow the target object to have an excellent flame retardancy.

The vitreous precursor composition is such that containing silicon component and/or metal component together with oxygen, and the resultant vitreous ceramic obtained by heating is such that being mainly composed of silicon oxide and/or metal oxide. Since the silicon component and/or metal component is likely to produce a vitreous ceramic through oxidation by heating, and the resultant vitreous ceramic mainly composed of silicon oxide and/or metal oxide is excellent in heat resistance, so that the vitreous precursor composition used for the surface treatment in the present invention is particularly preferable when it contains silicon component and/or metal component together with oxygen. The metal component herein can be any one or combination of two or more of Ti, Cu, Al, Zn, Ni, Zr and other transition metals. The vitreous ceramic may preliminarily be contained in the compound as a part thereof, or may exist in a form such that allowing conversion into such vitreous ceramic only after a part or the entire portion of the compound is heated. So-called sol-gel process is one possible method for the surface treatment with such vitreous precursor composition.

Another surface treatment relates to such that coating the nitrogen compound using stearic acid as an aliphatic-acid-base agent. Thus surface-treated nitrogen compound will be improved in the compatibility (affinity) with the target object such as resin or so, which allows the nitrogen compound to be dispersed in or immobilized on the target object in a uniform manner. The surface treatment with stearic acid can be effected by, for example, mixing 100 weight parts of the nitrogen compound with 0.01 to 1 weight parts of stearic acid under stirring, and then heating the mixture within a temperature range from 70 to 80°C.

The flame-retardant material of the present invention may also be such that containing a product obtained by reacting a compound having a group expressed as NₓO_{y} (where, x and y are natural numbers) with a compound having a group capable of generating water upon heating. For example, it may be a nitric-acid-base composite compound obtained by reacting a hydroxide with nitric acid, and more specifically, a compound having in a single molecule at least a hydroxyl group and/or a group with crystal water, and a group expressed as NₓO_{y} (where, x and y are natural numbers).

In one more preferred embodiment, the group capable of generating water upon heating is contained in a form of a hydroxyl-group-containing compound. Metal hydroxide is recommendable for such hydroxyl-group-containing compound. More specifically, it is exemplified by a compound mainly comprising at least one compound selected from the group consisting of aluminum hydroxide, magnesium hydroxide and calcium hydroxide . That is, any mixtures comprising two or more compounds selected from aluminum hydroxide, magnesium hydroxide and calcium hydroxide are also allowable. It is still also allowable to use a compound having in its composition two or more metal elements. Possible examples thereof include calcium aluminate hydrate (3CaO · Al₂O₃ · 6H₂O) and hydrotalcite (Mg₆Al₂(OH)₁₆CO₃ · 4H₂O). Now such hydrotalcite (Mg₆Al₂(OH)₁₆CO₃·4H₂O) is referred to as a compound which contains hydroxyl groups and crystal waters, and contains a plurality of metal elements in the composition thereof. The hydroxyl-group-containing compound and hydrate compound used herein preferably have a granular form with an average grain size of 0.1 to 100 µm.

Other examples available for the present invention include metal hydroxide selected from zinc hydroxide, cerium hydroxide, iron hydroxide, copper hydroxide, titanium hydroxide, barium hydroxide, beryllium hydroxide, manganese hydroxide, strontium hydroxide, zirconium hydroxide and gallium hydroxide; mineral such as boehmite containing such metal hydroxide; and basic magnesium carbonate.

Of course the foregoing surface treatment can be applied to the hydroxyl-group-containing compound composing the flame-retardant material.

Next, a flame-retardant polymer material of the present invention is such that having a matrix which comprises a polymer material and has dispersed therein a flame-retardant material which contains a group expressed as NₓO_{y} (where, x and y are natural numbers) and a group capable of generating water upon heating.

Another flame-retardant polymer material of the present invention is such that having a matrix which comprises a polymer material and has immobilized on the surface thereof a flame-retardant material which contains a group expressed as NₓO_{y} (where, x and y are natural numbers) and a group capable of generating water upon heating. Such flame-retardant material can partially be immobilized on the surface of the matrix and can partially be dispersed in such matrix.

Still another flame-retardant polymer material of the present invention is such that having a matrix which comprises a polymer material and has immobilized thereon a flame-retardant material which contains a compound selected from the group consisting of nitric acid compound, nitrous acid compound and hyponitrous acid compound, together with a hydroxyl-group-containing compound.

Such polymer materials having added thereto the flame-retardant material of the present invention can retain an excellent moldability without ruining the intrinsic properties thereof. The present invention can also provide a masterbatch which is a grain-formed molded product containing a polymer matrix having dispersed therein the flame-retardant material, and which is used for molding to thereby obtain a product having a secondary form and a volume larger than that of the individual grain.

It is to be noted that the flame-retardant material of the present invention can be used in combination with conventional inorganic and/or organic flame retarders. Specific examples of such known flame retarders include inorganic flame retarders typified by micas such as muscovite, phlogopite, biotite and sericite; minerals such as kaoline, talc, zeolite, borax, diaspore and gypsum; metal oxides such as magnesium oxide, aluminum oxide, antimony oxide and silicon dioxide; metal compounds such as calcium carbonate; zinc-base flame retarders such as zinc borate, zinc sulfate and zinc stannate; phosphorus-base compounds such as red phosphorus, ester of phosphoric acid and ammonium polyphosphate; and vitreous flame retarders containing low-melting-point glass; organic flame retarders typified by those of phosphorus-base, silicone-base and nitrogen-base; and metal powders.

In another aspect, the flame-retardant material of the present invention is such that being used for ensuring a target object, which mainly comprises a polymer material, flame retardancy as being dispersed therein or immobilized on the surface thereof, wherein the flame-retardant material contains a combustion-inhibitory oxidative decomposition accelerator which oxidatively decomposes such polymer material upon heating to thereby ensure such target object combustion-inhibitory property.

Another flame-retardant material of the present invention is such that being used for ensuring a target object, which mainly comprises a polymer material, flame retardancy as being dispersed therein or immobilized on the surface thereof, wherein the flame-retardant material contains a combustion-inhibitory oxidative decomposition accelerator which oxidatively decomposes such polymer material at the combustion temperature of the polymer material or at a lower temperature than such combustion temperature to thereby ensure such target object combustion-inhibitory property.

The flame-retardant material containing such combustion-inhibitory oxidative decomposition accelerator can be compounded (added) with a target object by, for example, mixing or immobilization. When such target object is exposed to a high temperature (e.g., approx. 200 to 500 °C, or higher), the combustion-inhibitory oxidative decomposition accelerator is activated by the heat to oxidatively decompose the target object (thermal oxidative decomposition), to thereby provide the target object an excellent flame retardancy. Here the flame retardancy is provided through oxidation without being associated with flame before the target object starts to burn in flame, and the combustion-inhibitory oxidative decomposition is supposed to proceed during the temperature elevation and before combustion in flame. In more detail, the combustion-inhibitory oxidative decomposition accelerator oxidatively decomposes the target object during or immediately before the combustion of such target object to thereby denature the target object into non-combustible components such as CO₂ and H₂O. It is to be understood now that combustion in the context of the present invention typically refers to such that proceeding in the air and being associated with flame. Such flame-retardant material of the present invention can provide an excellent flame retardancy in a small amount of addition, which is advantageous in that avoiding degradation of various properties of the target object and reducing the production cost.

The combustion-inhibitory oxidative decomposition accelerator can contain an oxidant. In this case, flame retardancy is provided through oxidative decomposition of the target object by such oxidant. Such oxidant can be at least one compound selected from the group consisting of nitric acid, nitric acid compound, permanganate, chromic acid, chromic acid compound, peroxide, salt of peroxoacid, salt of sulfuric acid, oxygen-base substance and oxide. Specific examples thereof include HNO₃, HNO₂, N₂O₃, N₂O₄, KMnO₄, MnO₂, Mn(CH₃CO₂)₃, CrO₃, Na₂Cr₂O₇, H₂O₂, Na₂O₂, (C₆H₅CO)₂O₂, CH₃CO₃H, C₆H₅CO₃H, K₂S₂O₈, Fe₂(SO₄)₃, O₂, PbO, HgO, AgO and Ag₂O.

The combustion-inhibitory oxidative decomposition accelerator may be such that containing a nitrogen compound and a hydroxyl-group-containing compound. In this case, the target object is given with the flame retardancy through a process in which, during or before the combustion of such target object, the nitrogen compound generates a nitrogen oxide, the hydroxyl-group-containing compound generates water, such nitrogen oxide and water then react with each other to produce nitric acid, and such nitric acid denatures the polymer material by thermal oxidation to produce non-combustible components such as CO₂ and H₂O. It is to be understood now that "denaturalization" in the context of this specification also includes changes caused by chemical reaction associated with breakage of covalent bond.

More specifically, for the case a metal hydroxide is used as the hydroxyl-group-containing compound, the nitrogen compound is preferably a nitric acid compound having a decomposition temperature of 50 to 600°C. Since most of metal hydroxide have a decomposition temperature at approx. 400°C or below, and will cause dehydration when heated to approx. 400°C. So that using such nitric acid compound having a decomposition temperature of 50 to 400°C as the nitrogen compound allows smooth progress of the reaction between the independently generated nitrogen oxide and water. For the case that aluminum hydroxide (decomposition temperature is approx. 300°C) is used as the metal hydroxide, the nitrogen compound preferably has a decomposition temperature of 50 to 350°C, and more preferably 100 to 300°C. For the case that magnesium hydroxide (decomposition temperature is approx. 350°C) is used as the metal hydroxide, the nitrogen compound is preferably a nitric acid compound having a decomposition temperature of 50 to 400°C, and more preferably 200 to 400°C for the same reason. The nitric acid compound can be selected from those listed in the above. The same will apply to the foregoing hydroxyl-group-containing compound.

The combustion-inhibitory oxidative decomposition accelerator can be contained in an amount of 150 weight parts or below per 100 weight parts of the target object. In the conventional procedure for adding an inorganic flame retarder such as aluminum hydroxide, a necessary amount of blending thereof was as much as 150 to 200 weight parts or around per 100 weight parts of the target object. On the contrary, the flame-retardant material of the present invention containing a nitrogen compound and a hydroxyl-group-containing compound can efficiently provide the flame retardancy, so that an amount of addition of such combustion-inhibitory oxidative decomposition accelerator of only as small as 150 weight parts or below per 100 weight parts of the target object will successfully result in a sufficient level of flame retardancy, which may be even attainable by the addition of 100 weight parts or below, and even by 50 weight parts or less in some cases. More specifically, the amount of addition of the combustion-inhibitory oxidative decomposition accelerator is preferably within a range typically from 5 to 150 weight parts, more preferably 10 to 100 weight parts, and still more preferably 20 to 80 weight parts, where a particularly preferable range resides in a range from 30 to 70 weight parts. The more the amount of addition increases, the more the target object becomes sensitive to property changes and the cost becomes large. On the contrary, too small amount of addition may fail in providing a sufficient level of flame retardancy, so that the amount of addition is preferably adjusted within the foregoing ranges.

That is, the flame-retardant material of the present invention is preferably added to 100 weight parts of the target object to be provided with flame retardancy so as to attain contents of the nitrogen compound of 0.1 to 50 weight parts and hydroxyl-group-containing compound of 10 to 100 weight parts. A content of the nitrogen compound of less than 0.1 weight parts may degrade the efficiency in providing flame retardancy, and exceeding 50 weight parts may result in cost increase. A preferable range of content of the nitrogen compound is 1 to 20 weight parts or around. On the other hand, a content of the hydroxyl-group-containing compound of less than 10 weight parts may degrade the efficiency in providing flame retardancy, and exceeding 100 weight parts may undesirably modify properties of the target object. More specifically, mechanical strength or moldability of the target object may be ruined. This is also disadvantageous in that a large amount of combustion residue may deposit within an incinerator. A preferable range of content of the hydroxyl-group-containing compound is 30 to 70 weight parts or around.

In another aspect, the flame-retardant polymer material of the present invention is such that mainly comprising a polymer component, wherein such flame-retardant polymer material shows in a spectrum of TDS analysis (thermal decomposition spectroscopy) *in vacuo* a peak attributable to a combustion-related gas component generated within a combustion temperature range of the polymer component, and a peak attributable to a combustion-inhibitory gas component containing at least a group expressed by COₓ (x is a natural number) and generated within a temperature range lower than the combustion temperature range of the polymer component.

Some of the conventional flame-retardant polymer material have added therein a metal hydroxide, such as aluminum hydroxide, which decomposes upon heating to generate water. Heating of such polymer materials can generate H₂O within a temperature range lower than the combustion temperature range thereof. Heating of the flame-retardant polymer material of the present invention will produce at least combustion-inhibitory gas expressed as COₓ, which is typified by CO and CO₂. The combustion-inhibitory gas also contains other components such as H₂O and NOₓ (where, x represents a natural number, and typically NO, NO₂, etc.). Since COₓ is non-combustible as being generally understood, it can be responsible for creating a flame-retardant atmosphere and inhibiting combustion (drastic oxidation) of the polymer material. Flame-retardant effect of the flame-retardant polymer material of the present invention can thus be confirmed also from the TDS analysis. The combustion-related gas component can be exemplified at least by those having a group expressed as CₙHₘ (where, n and m are natural numbers, and typically CH₄, C₂H₆, C₃H₈, etc.). It is to be noted now that COₓ detected in the TDS analysis is not ascribable to residual COₓ remaining after the measurement apparatus is evacuated from the normal atmosphere to vacuum.

The temperature range lower than the combustion temperature range of the polymer component can typically be a range lower by 50 to 400°C. Note that such difference of the temperature range depends on the rate of temperature elevation in the TDS analysis, and the foregoing range is attained at a standard rate of temperature elevation in TDS analysis of the polymer material, which is typified as 50°C /min. The combustion initiation temperature of the polymer component can be defined as a temperature whereat hydrocarbon or CO₂ vigorously starts to generate when the polymer component is heated in the air.

In another aspect, the flame-retardant polymer material of the present invention is such that mainly comprising a polymer component, wherein such flame-retardant polymer material shows a spectrum of TDS analysis (thermal decomposition spectroscopy) *in vacuo* in which a peak profile attributable to a combustible gas component generated by decomposition reaction of the polymer component; and a peak profile attributable to a non-combustible gas component generated as a decomposition product of the polymer component within a temperature range lower than that responsible for the start of the generation of such combustible gas component.

The target object of the measurement will never ignite nor burn when the combustion temperature thereof is attained in the TDS analysis *in vacuo*, since there is almost no oxygen. The target object of the measurement which is no more combustible will then cause breakage of the covalent bonds, and elimination of the decomposition products. The same will apply to a polymer without being provided with flame retardancy. The flame-retardant polymer material of the present invention can generate the non-combustible gas in the temperature range lower than the temperature range in which such decomposition and elimination occur. This allows the polymer material to be exposed to a flame-retardant atmosphere, to thereby exhibit the flame-retardant effect in the air. Similarly in the lower temperature range, a part of the polymer material is decomposed and emitted as the non-combustible gas component. Such process competes with the combustion (drastic oxidation) to thereby inhibit the combustion, which results in a desirable flame-retardant effect.

### BRIEF DESCRIPTION OF THE DRAWINGS

Fig. 1A is a schematic drawing showing an exemplary production process of a masterbatch comprising a flame-retardant polymer material compounded with a flame-retardant material of the present invention;
Fig. 1B is a schematic drawing showing a grain form of the masterbatch;
Fig. 1C is a schematic drawing showing another grain form of the masterbatch;
Fig. 1D is a schematic drawing showing still another grain form of the masterbatch;
Fig. 2A is a first schematic drawing showing an exemplary form of the flame-retardant material;
Fig. 2B is a second schematic drawing of the same;
Fig. 2C is a third schematic drawing of the same;
Fig. 3 is a schematic sectional view showing an exemplary constitution of an injection molding machine;
Fig. 4 is a process diagram showing an exemplary production process of a molded product by injection molding;
Fig. 5A is a first drawing for explaining an exemplary style of use of the masterbatch;
Fig. 5B is a second drawing of the same;
Fig. 6A is a drawing for explaining a method for obtaining a flame-retardant polymer material blended with a flame-retardant material of the present invention using a two-part mixing resin;
Fig. 6B is a drawing as continued from Fig. 6A;
Fig. 6C is a drawing as continued from Fig. 6B;
Fig. 6D is a drawing as continued from Fig. 6C;
Fig. 7A is a first drawing for explaining a method for immobilizing a flame-retardant material on the surface of a polymer matrix;
Fig. 7B is a second drawing of the same;
Fig. 7C is a third drawing of the same;
Fig. 7D is a fourth drawing of the same;
Fig. 7E is a fifth drawing of the same;
Fig. 8 is a drawing for explaining an exhibition mechanism of flame retardancy of a flame-retardant material of the present invention;
Fig. 9A is a first drawing showing results of TDS measurement;
Fig. 9B is a second drawing of the same;
Fig. 9C is a third drawing of the same;
Fig. 10A is an MS spectrum for the time of decomposition;
Fig. 10B is another MS spectrum of the same;
Fig. 10C is still another MS spectrum of the same;
Fig. 11A is a three-dimensional expression of the spectrum shown in Fig. 10A;
Fig. 11B is a three-dimensional expression of the spectrum shown in Fig. 10B;
Fig. 11C is a three-dimensional expression of the spectrum shown in Fig. 10C;
Fig. 12A is a drawing showing results of temperature-wise measurement of generation status of m/z = 30;
Fig. 12B is a drawing showing results of temperature-wise measurement of generation status of m/z = 46;
Fig. 13A is a drawing showing results of temperature-wise measurement of generation status of m/z = 28;
Fig. 13B is a drawing showing results of temperature-wise measurement of generation status of m/z = 44;
Fig. 14A is a drawing showing results of temperature-wise measurement of generation status of m/z = 18, 28, 30;
Fig. 14B is a drawing showing results of temperature-wise measurement of generation status of m/z = 28, 30, 44, 46;
Fig. 15 is a drawing showing results of temperature-wise measurement of generation status of m/z = 26, 27, 28;
Fig. 16A is a drawing showing results of TG-MS measurement in a He atmosphere at 300°C;
Fig. 16B is another drawing of the same;
Fig. 16C is still another drawing of the same;
Fig. 17 is a drawing showing results of TG-MS measurement in an O₂ atmosphere at 300°C;
Fig. 18 is a drawing showing results of GC-MS measurement at 480°C;
Fig. 19 is a drawing showing weight changes of a composition containing polyethylene, aluminum hydroxide and nitric acid compound during a temperature elevation process; and
Fig. 20 is a drawing for explaining an exhibition mechanism of flame retardancy of a flame-retardant material of the present invention.

### BEST EMBODIMENTS FOR CARRYING OUT THE INVENTION

Best embodiments for carrying out the present invention will be detailed referring to the attached drawings.

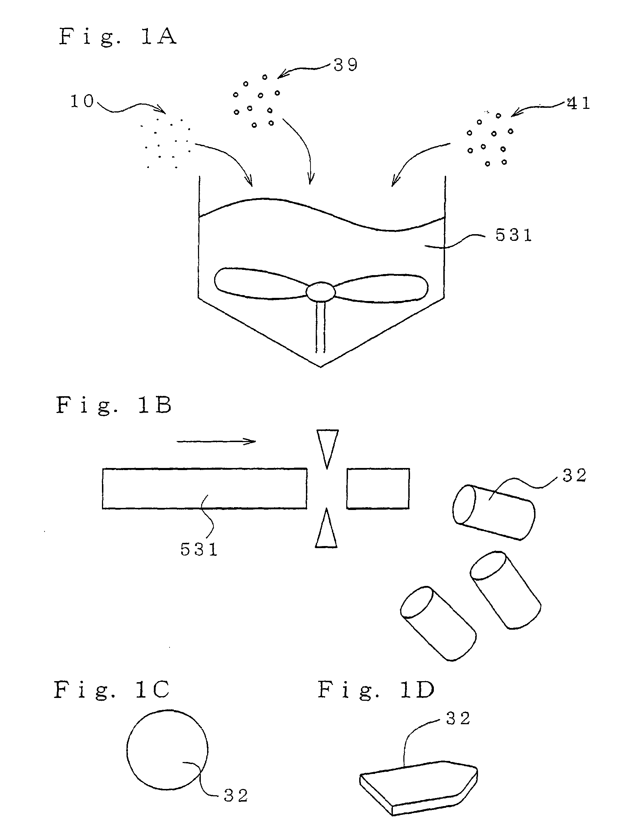

Figs. 1A to 1D are schematic drawings showing an exemplary production process of a masterbatch comprising a flame-retardant polymer material compounded with a flame-retardant material of the present invention, together with various forms of the masterbatch grain. Ammonium nitrate powder **10** (corresponded to the nitric acid compound, and thus to the nitrogen compound) and aluminum hydroxide powder **39** (corresponded to the hydroxyl-group-containing compound), both of which are flame-retardant materials, are blended and kneaded with a polymer material **41** which should serve as a matrix (preferably polyethylene which is a thermoplastic resin, for example), to thereby obtain a compound **531**. It is to be noted now that the flame-retardant material can also be a mixture obtained by preliminarily mixing the ammonium nitrate powder **10** and aluminum hydroxide powder **39** at a predetermined blending ratio. Preferable blending ratios will be described later in Experimental Examples. The compound **531** may contain inevitable impurities.

The compound **531** can be molded into a grain form such as pellet or the like which is available as a masterbatch grain **32**. The masterbatch grain **32** typically has a grain size of approx. 0.1 to 10 mm (more specifically approx. 1 to 4 mm) as being expressed by the diameter of an equivalent virtual sphere. While the shape of the masterbatch grain **32** is not specifically limited, the masterbatch grain **32** can typically be obtained by extruding the softened compound in a strand form, and then cutting the obtained strand into a predetermined length so as to form a columnar (cylindrical) grain, as shown in Fig. 1B. Figs. 1C and 1D show other examples of the grain form, where the former shows a spherical form (typically obtainable by die casting), and the latter shows a flaky one (typically obtainable by crushing and shaping of a sheet-formed compound), while being not limited thereto.

The ammonium nitrate powder (ammonium nitrate grain) **10** and aluminum hydroxide powder (aluminum hydroxide grain) **39** may be subjected to surface treatment. One possible surface treatment agent is such that containing at least carbon component and that being capable of improving affinity between the polymer material **41** and ammonium nitrate powder (ammonium nitrate grain) **10**. More specifically, any one compound selected from the group consisting of those of silane-base, titanate-base, aluminum-base, zirco-aluminum-base, olefin-base, aliphatic acid-base, oil-and-fat-base, wax-base and detergent-base is available.

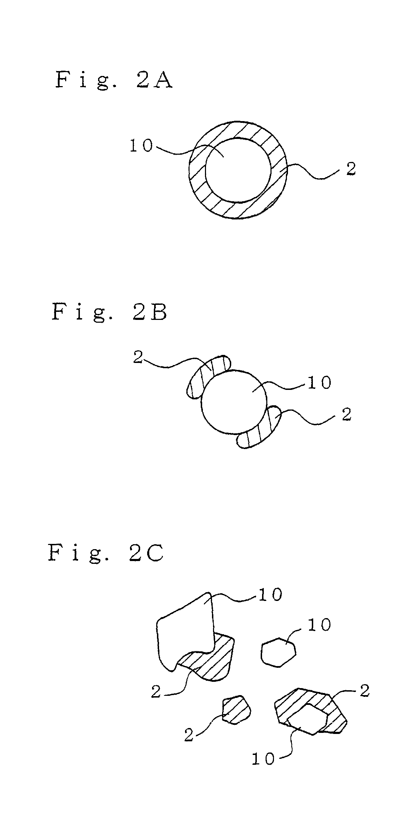

One possible example of such surface treatment relates to coating of a vitreous precursor composition based on the sol-gel process, where the composition contains silicon component and/or metal component together with oxygen, and capable of producing vitreous ceramic typically by heating. Figs. 2A to 2C are schematic drawings showing various styles of the coating onto the ammonium nitrate grain **10**. The ammonium nitrate grain **10** has compounded on the surface thereof a vitreous precursor composition **2**. While the grain **10** herein is schematically illustrated as a sphere, the grain shape can widely vary depending on the production process, and it is often that the grain will not always be spherical. Possible compounding style of the vitreous precursor composition **2** and ammonium nitrate grain **10** may be such that the vitreous precursor composition **2** uniformly covers almost entire surface of the ammonium nitrate grain **10** as shown in Fig. 2A, or such that the vitreous precursor composition **2** adheres partially on the surface of the ammonium nitrate grain **10** while leaving the residual surface uncovered and exposed as shown in Fig. 2B. Or, the shape of the ammonium nitrate grain **10** may be irregular as shown in Fig. 2C, which may be obtainable by crushing or cracking the spherical ammonium nitrate shown in Fig. 2A. Anyway, the target object is successfully provided with flame retardancy if such ammonium nitrate grain **10** and aluminum hydroxide powder **39** are compounded for example with a matrix (dispersion into and/or immobilization onto the matrix) of such target object composed for example of a polymer material. Note that the target object composed of a polymer material may be added with various additives, which may be inorganic or organic materials.

In the example shown in Fig. 2A, the thickness of the vitreous precursor composition **2** covering or adhering onto the ammonium nitrate grain **10** is approx. 0.01 to 1.0 µm. Flame-retardant effect of the flame-retardant material containing such ammonium nitrate grain **10** and aluminum hydroxide grain **39** (see Fig. 1A) is extremely large. So that the flame-retardant material can be added to the target object, which mainly comprises a polymer material, typically in an amount of 5 to 150 weight parts, more preferably 10 to 100 weight parts, still more preferably 20 to 80 weight parts, and most preferably 30 to 70 weight parts per 100 weight parts of such target object. Such small amount of addition is advantageous in that being less causative of characteristic changes of the target object such as resin, and in that ensuring cost reduction to a considerable degree.

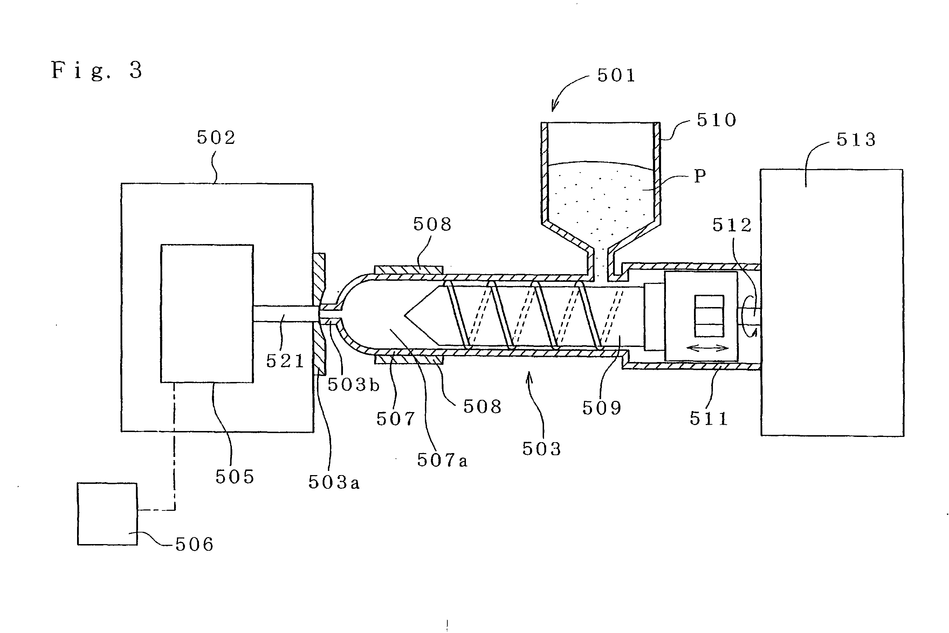

Next, an exemplary production process of molded product (secondary molded product) using the masterbatch shown in Figs. 1B to 1D will be explained referring to a case in which an injection molding machine shown in Fig. 3 is used. It is a matter of course that any known molding processes can be adopted depending of purposes, and the molded product can be obtained typically by compression molding, transfer molding, extrusion molding, blow molding, calender molding, laminate molding and sheet forming.

In an example shown in Fig. 3, an injection molding machine **501** comprises a molding section **502** and a injection apparatus **503** for feeding molten resin to the molding section **502**, which is typified by a screw injection apparatus. The molding section **502** further comprises a die **505**, and a drive mechanism **506** which comprises a mechanical drive mechanism such as a cam or crank mechanism and a hydraulic mechanism such as a hydraulic cylinder, both of which are provided for clamping or opening such die **505**. A runner **521** for feeding molten resin to such die **505** has connected thereto an injection nozzle **503b** of the injection apparatus **503** via a sprue **503a.**

In the injection apparatus **503**, a feeding screw **509** driven by a hydraulic motor **513** as being transmitted by a shaft **512** is housed in a heating cylinder **507** which is heated by a heat source such as a band heater **508**, and a hopper **510** for feeding masterbatch P is attached thereto. The masterbatch **P** is fed from the hopper **510** as the screw **509** rotates, and a polymer matrix is melted by heating within the heating cylinder **507** to produce a molten compound, which is then pooled in a pooling portion **507a.** Advancing now the screw **509** in a predetermined length with the aid of the hydraulic cylinder **511** allows a predetermined amount of the molten compound to be injected within the die 505 through the runner **521**.

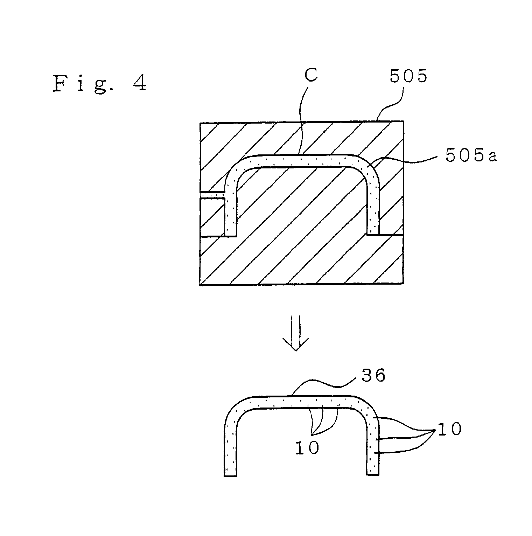

As shown in Fig. 4, the molten compound **C** injected into a cavity **505a** of the die **505** can form a polymer material compounded with the flame-retardant material of the present invention as the polymer matrix solidifies, and opening of the die **505** will yield a secondary molded product **36** as a polymer molded product conforming to the morphology of the cavity. Temperature of such injection molding is selected as lower than the decomposition temperature of the nitric acid compound included in the flame-retardant material.

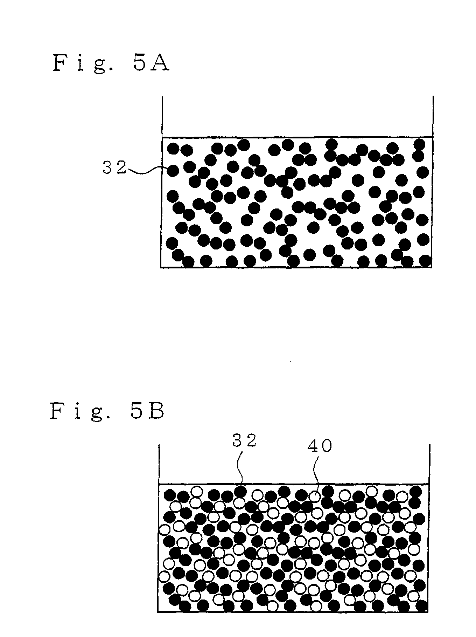

While the masterbatch grain **32** can independently be used to obtain the molded product as shown in Fig. 5A, it is also allowable to properly mix therewith a dilution polymer material grain **40** so as to produce a secondary molded product having a content of the compound grain lower than that in the masterbatch grain **32**, where such dilution polymer material grain **40** comprises a polymer material same as or different from the polymer matrix composing such masterbatch grain as shown in Fig.5B. In this case, the content of the compound grain in the resultant secondary molded product is determined by the content of such compound grain in the masterbatch grain **32** and a compounding ratio of the dilution polymer material grain **40** in respect of the masterbatch grain **32.**

The content of the compound grain in the masterbatch grain to be diluted is as high as 20 to 67 wt% on the weight basis, so that it is preferable to blend a dispersion aid so as to uniformly disperse the compound grain at such a high content. Metallic soap is an example of preferable dispersion aid. The metallic soap can be exemplified as those having an organic acid component selected from naphthenic acid (naphthenate), lauric acid (laurate), stearic acid (stearate), oleic acid (oleate), 2-ethylhexanic acid (octate), fatty acid in linseed oil or soybean oil (linolate), tall oil (tollate) and rosin (rosinate). Examples of metal component are as listed below:
naphthenates (Al, Ca, Co, Cu, Fe, Pb, Mn, Zn, etc.);
rosinates (Al, Ca, Co, Cu, Fe, Pb, Mn, Zn, etc.);
linolates (Co, Fe, Pb, Mn, etc.);
stearates (Ca, Zn, etc.);
octates (Ca, Co, Fe, Pb, Mn, Zn, etc.); and
tallate (Ca, Co, Fe, Pb, Mn, Zn, etc.).

Of these, copper stearate and zinc stearate can be exemplified as specific examples of the metallic soap particularly excellent in dispersion effect (stearic acid treatment). It is to be noted that an excessive compounding of the metallic soap will raise a problem in material strength and homogeneity, and too small amount of compounding will result in insufficient dispersion effect, so that it is preferable to select the amount of compounding within a range typically from 0.01 to 3 wt% (more specifically, 0.3 wt%) so as to avoid such disadvantages.

Besides the foregoing examples, it is also allowable to separately prepare masterbatch **A** (not shown) having blended therein ammonium nitrate powder **10** and polymer material **41,** and masterbatch **B** (not shown) having blended therein aluminum hydroxide powder **39** and polymer material **41,** and then to mix both masterbatches **A** and **B** to thereby obtain a molded product. It is still also allowable to blend masterbatch **A** with aluminum hydroxide powder **39,** or to blend masterbatch **B** with ammonium nitrate powder **10.**

It is also allowable to compose the flame-retardant polymer material having compounded therein the flame-retardant material of the present invention with a molding resin material, adhesive or paint of two-part-mixing type, which individually comprises a principal agent containing an uncured resin component such as epoxy resin, urethane resin (including urethane rubber) or silicone resin, and a curing agent for curing such uncured resin component.

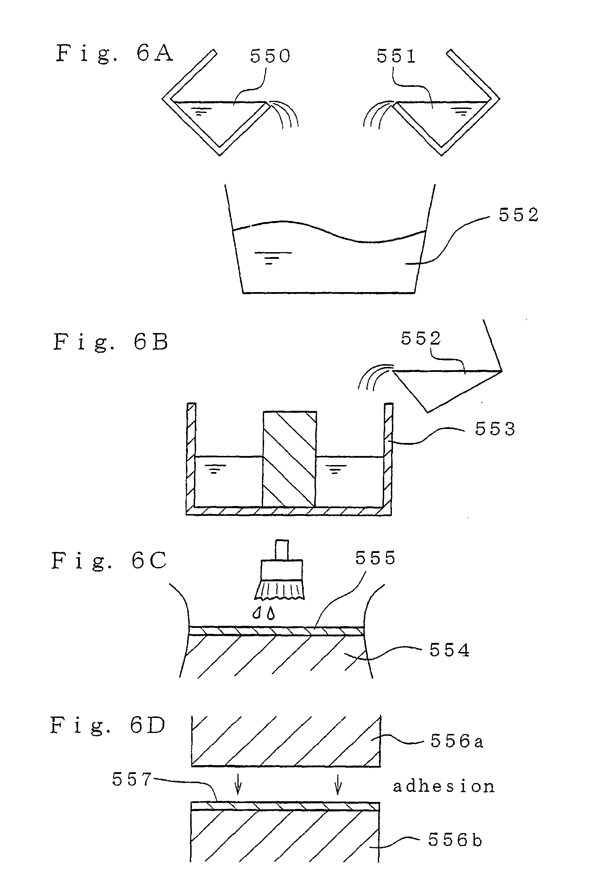

A specific example of production of such molding material using epoxy resin will be explained referring to Figs. 6A to 6D. A principal agent **550** comprises an uncured bisphenol-base epoxy resin component having contained therein the flame-retardant material together with optional additives such as flame-retardant auxiliary, filler, coloring matters such as pigment or dye, and dispersion aid; where the viscosity of which being adjusted by a proper solvent. On the other hand, a curing agent **551** comprises a curing component such as amine, isocyanate or acid anhydride as being dissolved or dispersed in a solvent. Both agents **550**, **551** are mixed in a predetermined ratio immediately before use as shown in Fig. 6A, and the obtained mixed composition **552** is subjected to necessary treatment depending on purposes within a pot life time thereof. For example, if the mixed composition **552** is to be used as a molding resin material, it will be poured into the die **553** so as to obtain a molded product of the flame-retardant polymer material having a desired shape as shown in Fig. 6B. For the mixed composition **552** intended for a paint, it will be coated on a target plane of an object to be painted **554** and then cured so as to obtain a paint film **555** of the flame-retardant polymer material as shown in Fig. 6C. Or, for the mixed composition **552** intended for an adhesive, it will be coated on target planes of objects to be bonded **556a, 556b** so as to obtain an adhesion structure in which a resultant flame-retardant adhesive layer **555** binds both objects to be bonded **556a**, **556b** as shown in Fig. 6D.

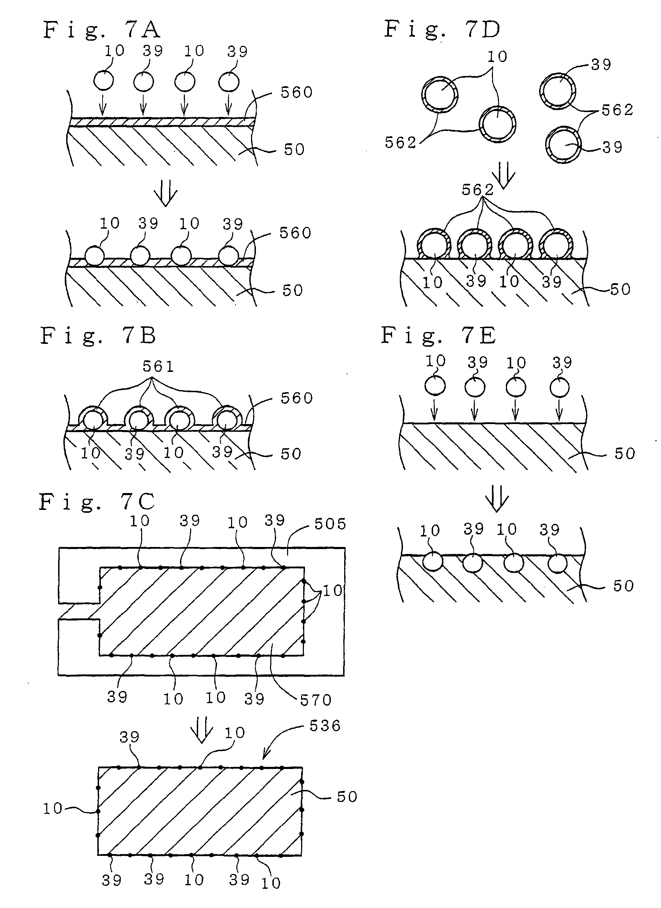

The flame-retardant material can also be immobilized on the surface of the polymer matrix. Figs. 7A to 7E show some examples of such cases. Fig. 7A shows an example based on adhesion in which the ammonium nitrate grains **10** and aluminum hydroxide grains **39** are immobilized on the surface of a polymer matrix **50** as being interposed by an adhesive resin layer **560** formed thereon. It is also allowable that the ammonium nitrate grains **10** and aluminum hydroxide grains **39** are further dispersed into the polymer matrix **50** (the same will apply also to the examples described hereinafter) . Or as shown in Fig. 7B, such immobilized ammonium nitrate grains **10** and aluminum hydroxide grains **39** may further be covered with an overcoat **561** comprising a resin or the like.

Fig. 7C shows an example in which the coated ammonium nitrate grains **10** and aluminum hydroxide grains **39** are integrated with the surface of the matrix **50** composing a molded product **536**, which is obtained by preliminarily coating the ammonium nitrate grains **10** and aluminum hydroxide grains **39** on the inner surface of a cavity of the die **505**, and filling such die with a molten resin **570**, which is then allowed to cure. Fig. 7D shows an example in which the ammonium nitrate grains **10** and aluminum hydroxide grains **39** are immobilized, which can be attained by preliminarily covering the surface of the ammonium nitrate grains **10** and aluminum hydroxide grains **39** with an immobilization resin layer **562**, softening such immobilization resin layer **562** through heating so as to be adhered onto the surface of the matrix **50**, and then curing the resin. In this case, preheating of the matrix **50** to a degree not causative of unnecessary deformation thereof will facilitate the softening and adhesion of the immobilization resin layer **562.** Fig. 7E shows an example in which the ammonium nitrate grains **10** and aluminum hydroxide grains **39** are embedded into the surface portion of the matrix **50,** which can be attained by blasting or pressurizing the ammonium nitrate grains **10** and aluminum hydroxide grains **39** onto the matrix **50**. In this case, softening of at least the surface portion of the matrix **50** will facilitate such embedding.

In the present invention, the polymer material or polymer component composing the matrix is preferably selected from those mainly containing saturated hydrocarbon group, which are exemplified as polyethylene, polypropylene, ethylene-vinyl acetate copolymer, ethylene-vinyl alcohol copolymer and ethylene-polypropylene-diene copolymer (EPDM). Addition of the flame-retardant material of the present invention into a polymer material mainly containing unsaturated hydrocarbon groups such as aromatic ring may be successful in providing flame retardancy but only in a limited degree as compared with the case it was added to a polymer material mainly containing saturated hydrocarbon groups, since oxidative decomposition of such polymer material cannot proceed smoothly due to the unsaturated hydrocarbon groups.

### (Experimental Example 1)

The flame-retardant material of the present invention was subjected to the following experiments.

15 g of ammonium nitrate, 150 g of aluminum hydroxide and 300 g of polypropylene resin (PP) were mixed, and the obtained mixture was made into a polymer molded product (sample **1**) using an extrusion/injection molding machine. Independently, 60 g of ammonium nitrate, 210 g of aluminum hydroxide and 300 g of polyethylene resin (PE) were mixed, and the obtained mixture was made into a polymer molded product (sample **2**) using an extrusion/injection molding machine. Still independently, ammonium nitrate grain preliminarily subjected to SiO₂ coating by the sol-gel process as shown in Figs. 2A to 2C was compounded according to a compounding ratio same as that for the foregoing sample **1,** and a polymer molded product (sample **3**) was obtained using an extrusion/injection molding machine. The ammonium nitrate grain was also treated with stearic acid, and a polymer molded product (sample **4**) was obtained similarly to the foregoing sample **1**.

Thus obtained samples **1** to **4** were tested by Determination of Burning Behavior by Oxygen Index (JIS K-7201), UL94 combustibility test (fifth edition, October 26, 1996), moldability (judged as good if no oily bloom observed), coloring of resin (visual inspection) and tensile strength (JIS K-7113). Results were shown in Table 1.

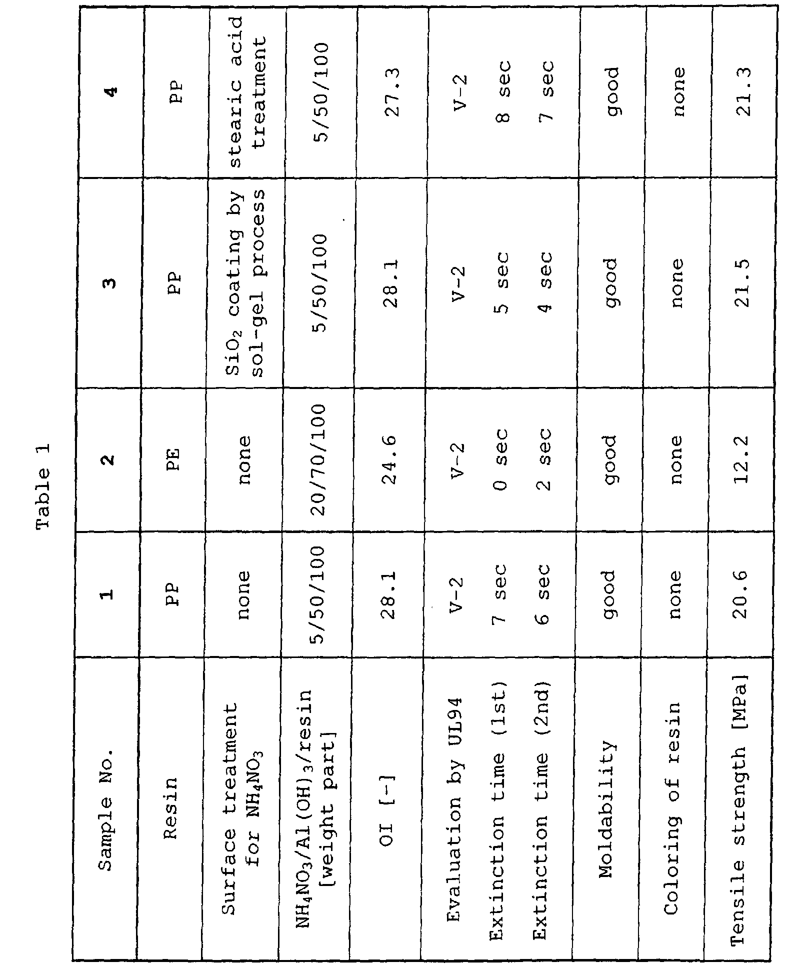

All samples showed good results both in the oxygen index test and UL 94 test, which proved sufficient flame retardancy. Also the moldability was found to be desirable in all samples. No sample showed coloring of the resin. Samples **3** and **4**, having the ammonium nitrate grain coated with SiO₂ by the sol-gel process and with stearic acid, respectively, showed higher tensile strength as compared with that shown by samples **1** and **2**. Also samples using ammonium nitrite in place of ammonium nitrate gave almost similar good results in the same test.

Next, sample **1a** which is similar to sample **1** except that containing no ammonium nitrate, and sample **1b** which is similar to sample **1** except that containing zinc nitrate in place of ammonium nitrate were similarly tested and compared with sample **1**. Results were shown in Table 2.

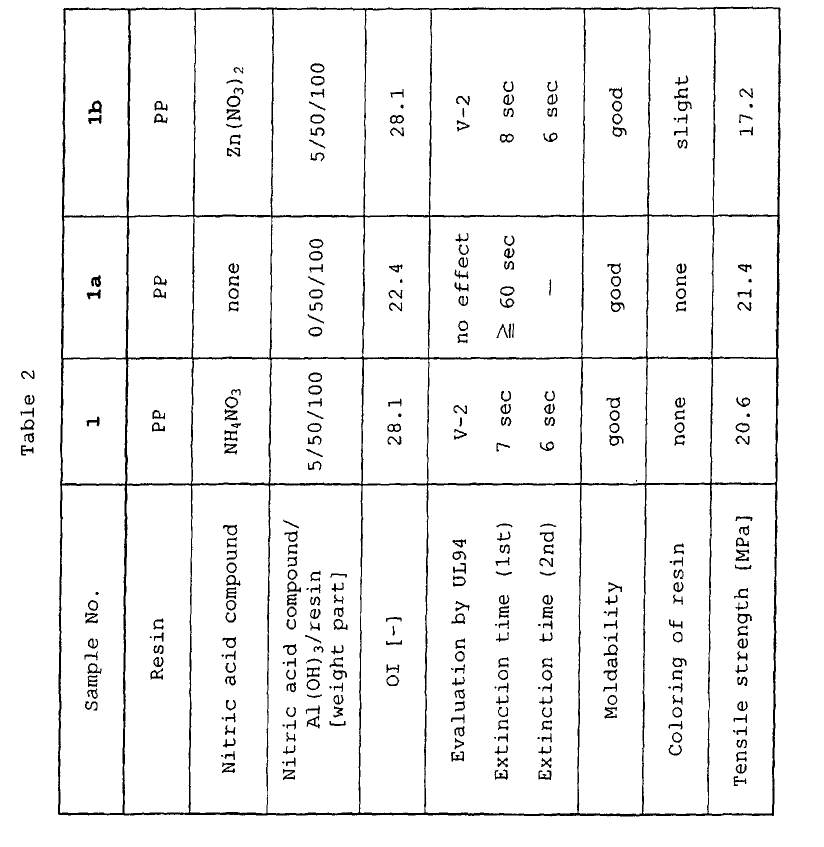

Sample **1a** containing no ammonium nitrate showed almost no flame-retardant effect, and sample **1b** containing zinc nitrate in place of ammonium nitrate showed an almost equivalent level of flame retardancy with sample **1** but resulted in slight coloring of the resin. It is to be noted that addition of aluminum hydroxide and ammonium nitrate to the resin can produce white color ascribable to aluminum hydroxide. Such resin allows arbitrary coloring thereafter.

Next, sample **2a** which is similar to sample **2** except that containing no ammonium nitrate, and sample **2b** which is similar to sample **2** except that containing zinc nitrate in place of ammonium nitrate were similarly tested and compared with sample **2**. Results were shown in Table 3.

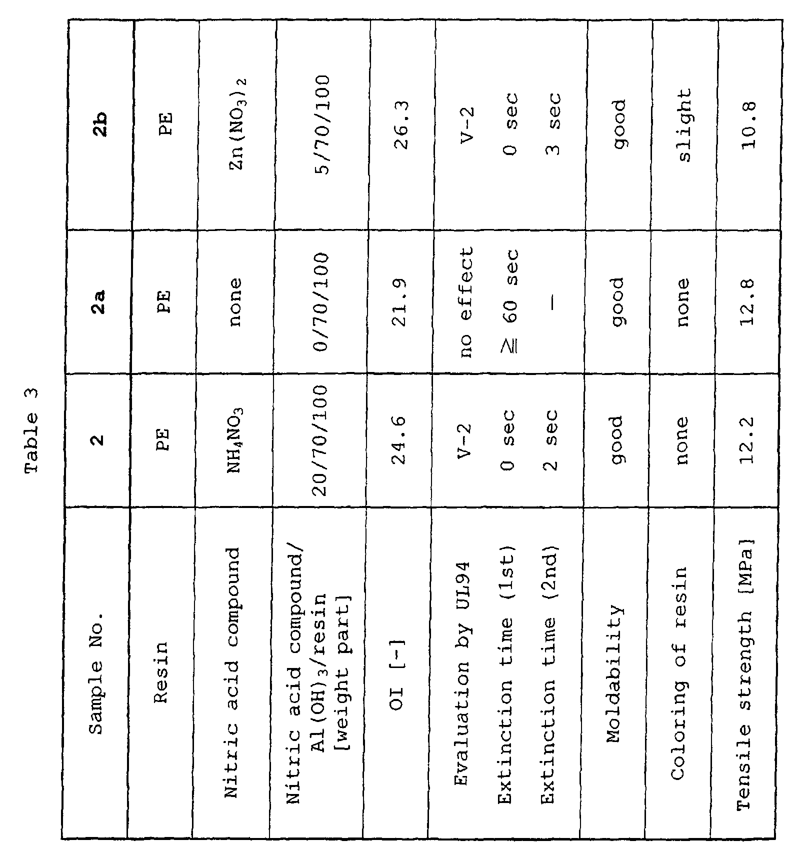

Sample **2a** containing no ammonium nitrate showed almost no flame-retardant effect, and sample **2b** containing zinc nitrate in place of ammonium nitrate showed an almost equivalent level of flame retardancy with sample **2** but resulted in slight coloring of the resin.

Moreover, sample **5** which is similar to sample **1** except that containing guanidine nitrate in place of ammonium nitrate, sample **6** which is similar to sample **1** except that containing magnesium hydroxide in place of aluminum hydroxide, and sample **7** which is similar to sample **6** except that containing guanidine nitrate in place of ammonium nitrate were similarly tested and compared with sample **1**. Results were shown in Table 4.

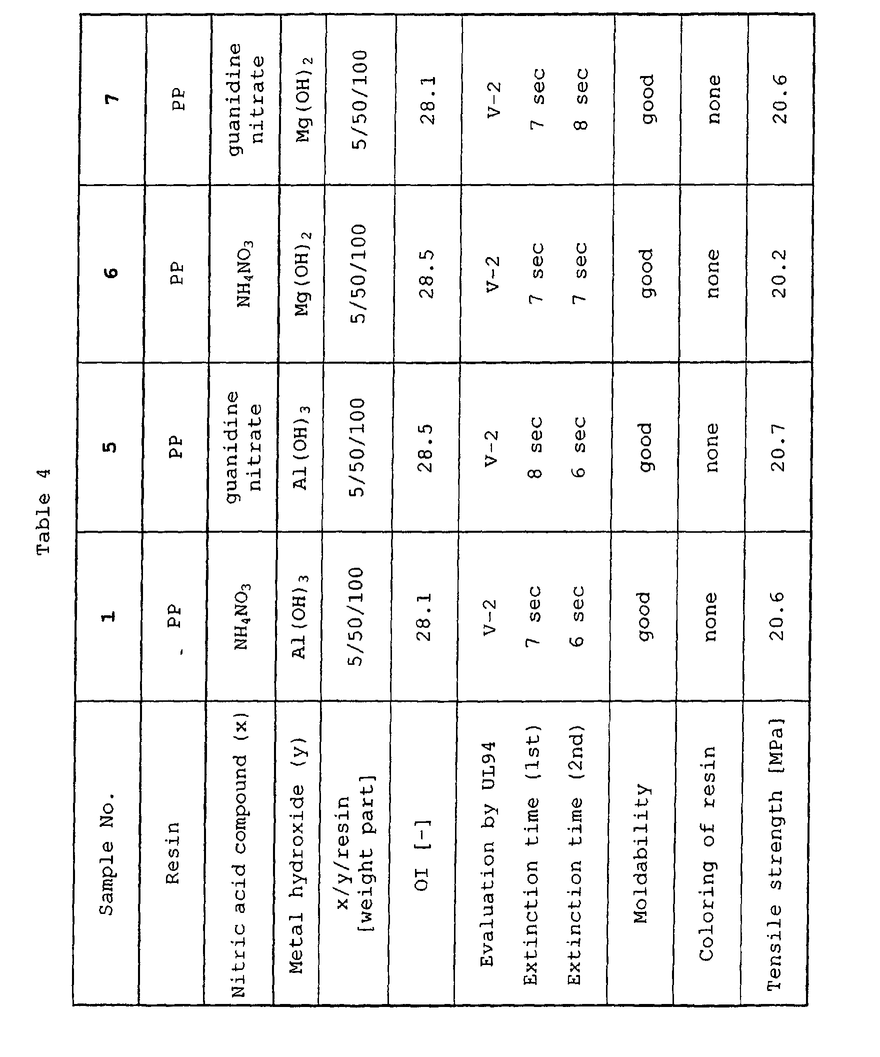

Samples **1** and **5** to **7** were found to have excellent flame retardancy, and cause no coloring of the resin. It is thus known from the findings that the polymer material, which is obtained by blending a polymer component (target object) such as resin with the flame-retardant material containing a group expressed by NₓO_{y} (where, x and y are natural numbers) (e.g., ammonium nitrate, ammonium nitrite, guanidine nitrate, zinc nitrate) and a group capable of generating water, exhibits excellent flame retardancy while successfully keeping properties of the resin before such compounding almost intact.

### (Experimental Example 2)

The flame-retardant material of the present invention was further subjected to the following experiments.

The individual nitric acid compounds as the nitrogen compound, and the individual hydroxyl-group-containing compounds, both of which being listed in Table 5, were mixed with any of the target objects which are exemplified as polypropylene (PP: product of Grand Polymer Co., Ltd., J708), polyethylene (PE: product of Japan Polychem Corporation, LJ800) and ethylene-vinyl acetate copolymer (EVA: product of Tosoh Corporation, U-537), and polymer molded products were obtained using an extrusion/injection molding machine (Examples 1 to 10). The obtained molded products were tested according to Determination of Burning Behavior by Oxygen Index (JIS K-7201) and UL94 combustibility test (fifth edition, October 26, 1996). Results were shown in Table 5. Decomposition temperature of the individual compounds measured in the thermal analyses were shown in Tables 6 and 7.

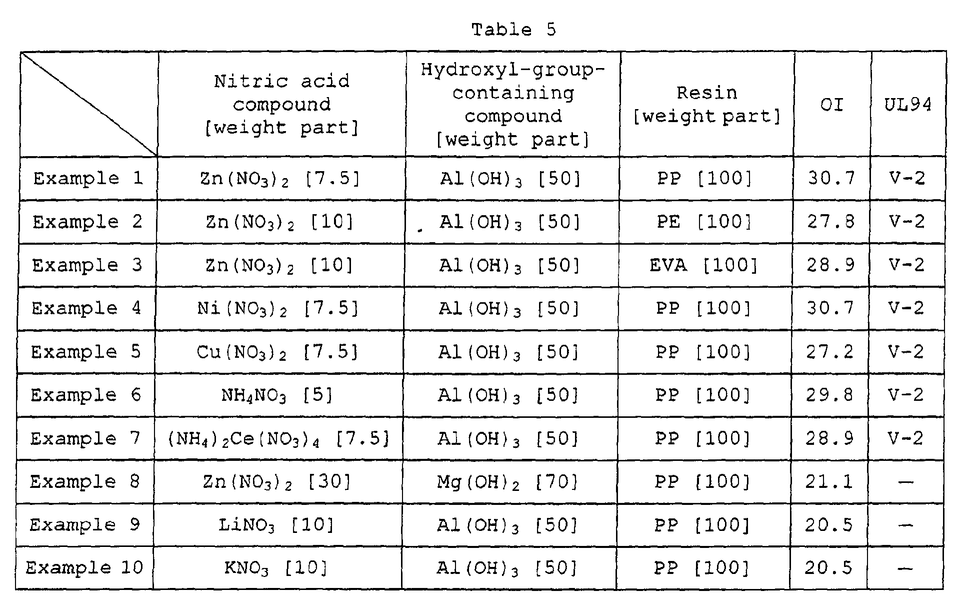

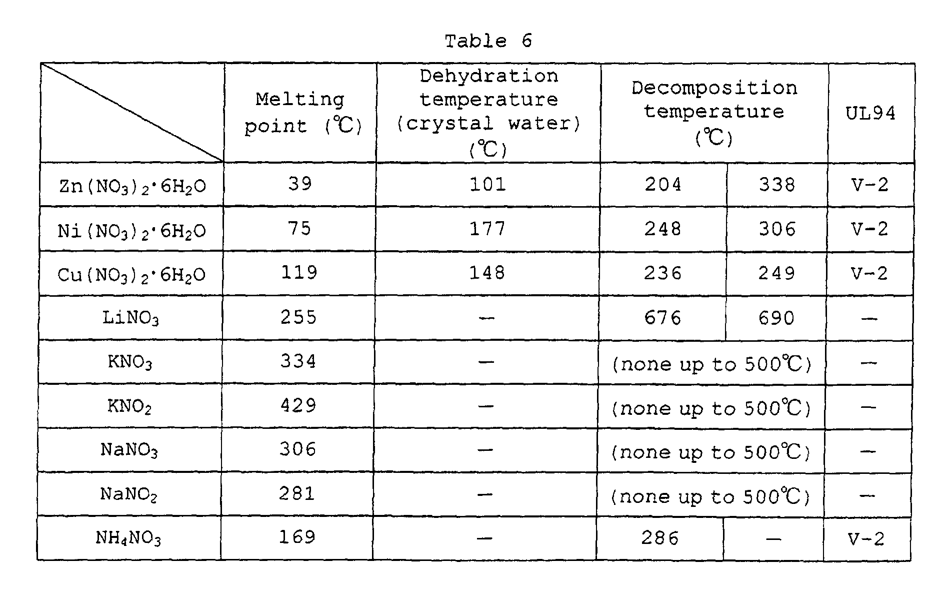

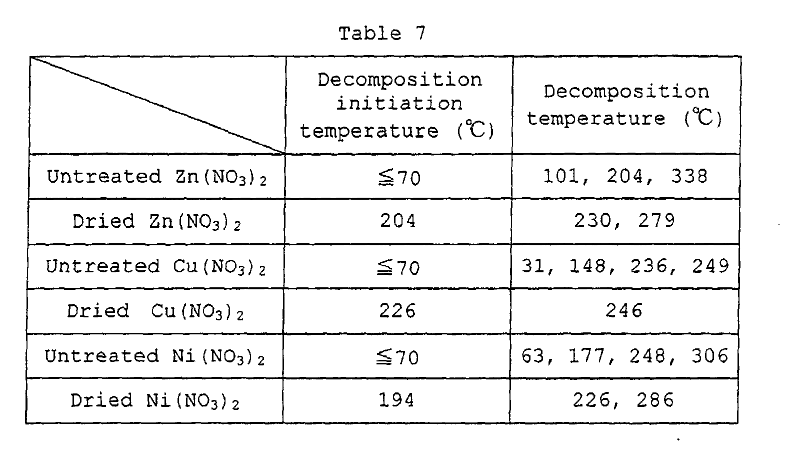

Decomposition temperature of dry preparations of the individual compound was measured as 204°C for zinc nitrate, 248°C for nickel nitrate, 236°C for copper nitrate, 286°C for ammonium nitrate, 500°C or above for lithium nitrate and potassium nitrate, approx. 300°C for aluminum hydroxide and approx. 350°C for magnesium hydroxide. The individual molded products obtained in Examples 1 to 7 gave good results in the oxygen index (OI) test and UL94 test, which proves sufficient flame retardancy. It was also confirmed that the individual molded products obtained in Examples 1 to 7 can ensure a desirable degree of flame retardancy in an amount of addition of as low as 55 to 60 weight parts per 100 weight parts of the resin, where the nitric acid compound accounts for 5 to 10 weight parts, and the hydroxyl-group-containing compound accounts for 50 weight parts. All molded products obtained in Examples 1 to 7 were found to be excellent in the moldability. On the other hand, all molded products obtained in Examples 8 to 10, in which decomposition temperatures largely differ between the nitric acid compound and hydroxyl-group-containing compound, showed flame retardancy only to a degree smaller than that shown in Examples 1 to 7.

Findings of the thermal analyses listed in Table 7 proved advantage of drying treatment (alcohol dehydration) of the nitric acid compound. Metal nitrate without drying treatment will start to decompose at a temperature at approx. 70°C or lower, which undesirably reduces a ratio of such metal nitrate decomposable at the decomposition temperature of the hydroxyl-group-containing compound, which results in only a limited degree of flame retardancy. So that the decomposition temperature of the metal nitrate as close as possible to that of the hydroxyl-group-containing compound will give better results. Such condition ensures most efficient production of nitric acid through reaction between a nitrogen compound and water generated by the decomposition. Thus produced nitric acid eventually allows rapid progress of thermal decomposition of the polymer. Care should be taken since the decomposition of the metal nitrate in an excessively low temperature range may degrade the intrinsic moldability or various properties of the polymer material due to generated nitrogen oxide. The thermal analysis herein was performed using a thermogravimetric differential thermal analyzer (TG-DTA) apparatus manufactured by Rigaku International Corporation, at a temperature elevation rate of 10°C/min. The same condition for the temperature elevation in the DTA measurement was applied also to the experiments thereafter.

Next, the molded product of Example 1 listed in Table 5, the molded product of Example 11 listed in Table 8, which product contains the same components as in Example 1 and wherein the nitric acid compound is coated with SiO₂ by the foregoing sol-gel process, and a polypropylene molded product (Comparative Example 1) were subjected to tensile strength test, elongation test, Izod impact test, and combustion test based on oxygen index. Results were shown in Table 8.

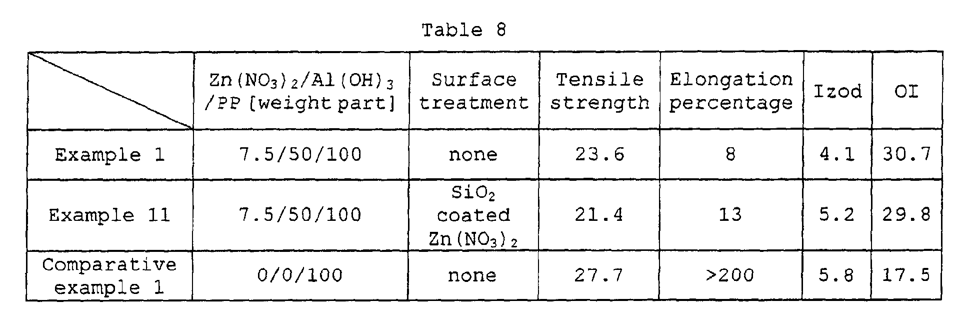

As for mechanical properties such as tensile strength (in Pa), elongation percentage (in %) and Izod impact value (in J/m²), Examples 1 and 11 were found to be lowered in the elongation percentage as compared with Comparative Example 1, but no considerable decrease in the tensile strength and impact strength were observed. In particular for Example 11 in which zinc nitrate is coated with SiO₂ by the sol-gel process gave better results in the elongation percentage and Izod impact value. The obtained oxygen indices indicated that desirable flame retardancy was attained both in Examples 1 and 11.

From these findings, the polymer material, which is obtained by blending a polymer component (target object) such as resin with the flame-retardant material containing a group expressed by NₓO_{y} (where, x and y are natural numbers) (e.g., ammonium nitrate, ammonium nitrite, guanidine nitrate, zinc nitrate) and a group capable of generating water, exhibits excellent flame retardancy while successfully keeping properties of the resin before such compounding almost intact.

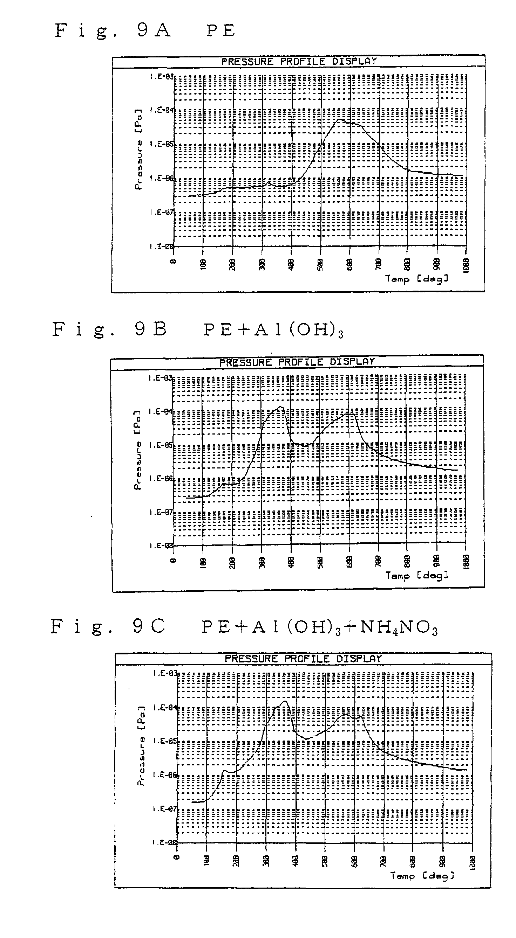

The following measurements were carried out to elucidate the exhibition mechanism of the flame retardancy in the flame-retardant material of the present invention. First, gases emitted during the temperature elevation were examined by TDS (thermal desorption spectroscopy) measurement. In the measurement, the individual samples were heated by infrared radiation at a speed of 50°C/min using a thermal desorption analyzer manufactured by Denshi Kagaku K.K. (the same will apply to all TDS analyses thereafter). At the same time, the emitted gases were also examined by mass spectroscopy (abbreviated as MS, hereinafter) . Three samples were used herein, which were simple polyethylene (PE) also used in the foregoing Experiment, a composition containing such polyethylene and aluminum hydroxide (PE + Al(OH)₃), and a composition containing such composition and ammonium nitrate (PE + Al(OH)₃ + NH₄NO₃). Results were expressed as graphs in Figs. 9A to 9C. In the individual graphs, the abscissa denotes temperature and the ordinate denotes pressure. In Fig. 9A, a large pressure change observed at around 550 to 600°C is ascribable to generation of hydrocarbons caused by the decomposition of polyethylene, which can be seen also in the systems of (PE + Al(OH)₃) and (PE + Al(OH)₃ + NH₄NO₃). On the other hand, the binary (PE + Al(OH)₃) system and ternary (PE + Al(OH)₃ + NH₄NO₃) system showed a pressure change at around 350°C, which is not observed for the unitary (PE) system. From this, it can be concluded that the systems of (PE + Al(OH)₃) and (PE + Al(OH)₃ + NH₄NO₃) cause emission of the gases (e.g., H₂O gas in conjunction with the decomposition of Al(OH)₃) almost at the same temperature.

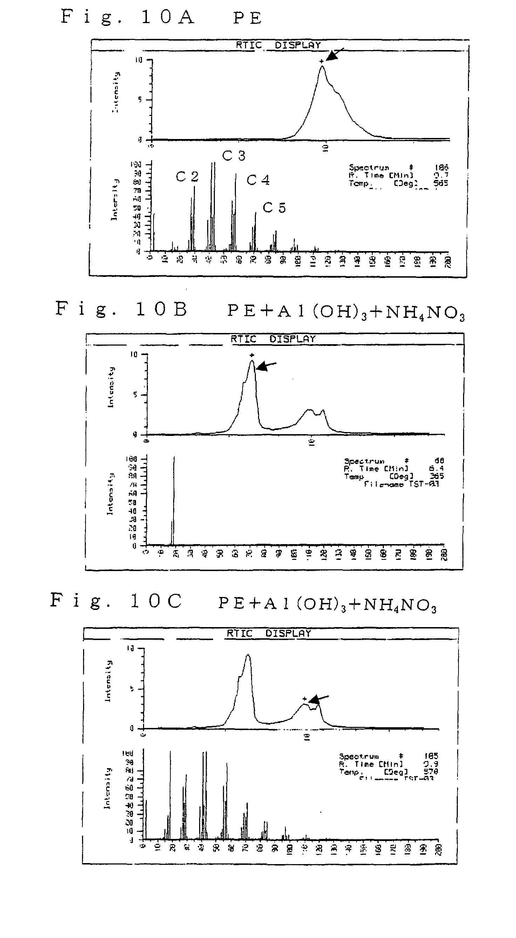

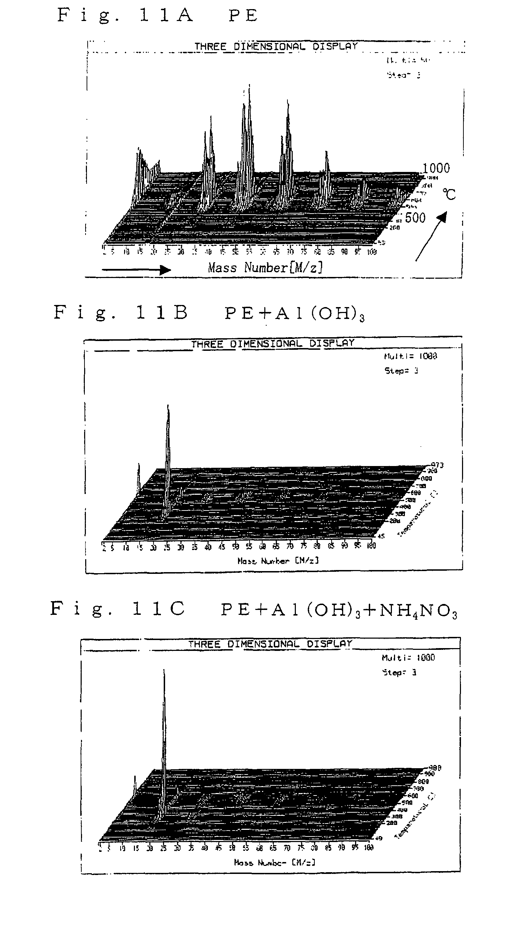

Next, the ternary (PE + Al(OH)₃ + NH₄NO₃) system was examined by MS at a predetermined temperature. Results were shown in Figs. 10B and 10C. In these graphs, the abscissa denotes mass number (m/z) and the ordinate denotes spectral intensity. Fig. 10A comparatively shows a mass spectrum for the unitary (PE) system measured at 565°C, Fig. 10B shows a mass spectrum for the ternary (PE + Al(OH)₃ + NH₄NO₃) system measured at 365°C (low temperature side), and Fig. 10C shows a mass spectrum for the ternary (PE + Al(OH)₃ + NH₄NO₃) system measured at 570°C (high temperature side) . From these results, the ternary (PE + Al(OH)₃ + NH₄NO₃) system generates H₂O in the low temperature side (approx. 300 to 400°C), and generates hydrocarbons in conjunction with the decomposition of polyethylene in the high temperature side (approx. 550 to 600°C). Figs. 11A to 11C are three-dimensional MS charts, in which an additional dimension (Z axis) denotes temperature. Note that all temperatures described in this specification and the attached drawings are expressed in °C.

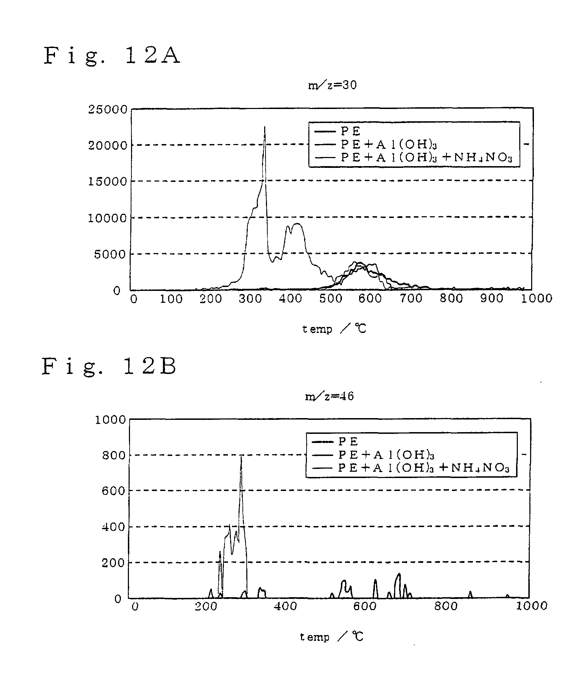

Next, to analyze generation conditions specific to m/z = 30 (NO) and m/z = 46 (NO₂), each of polyethylene (PE), the composition of polyethylene and aluminum hydroxide (PE + Al (OH)₃), and the composition of polyethylene and aluminum hydroxide and ammonium nitrate (PE + Al(OH)₃ + NH₄NO₃) was examined for the amount of generation of m/z = 30 (NO) and m/z = 46 (NO₂) at the individual temperatures. Figs. 12A and 12B show the obtained analytical graphs. Fig. 12A indicates that only the (PE + Al (OH)₃ + NH₄NO₃) system is responsible for the generation of m/z = 30 (NO) at around 300°C and 400°C. Fig. 12B indicates that only the (PE + Al(OH)₃ + NH₄NO₃) system is responsible for the generation of m/z = 46 (NO₂) at around 250 to 300°C. It was thus known that a system containing aluminum hydroxide and ammonium nitrate, in particular a resin (PE) containing such two components, can generate m/z = 30 (NO) and m/z = 46 (NO₂) before the resin starts to decompose (500 to 700°C).

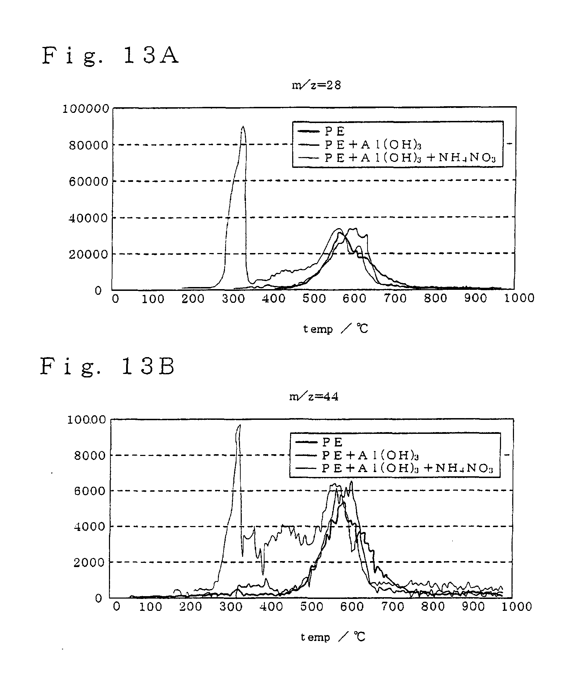

Similarly, to analyze generation conditions specific to m/z = 28 (CO) and m/z = 44 (CO₂), the individual systems of (PE), (PE + Al(OH)₃) and (PE + Al(OH)₃ + NH₄NO₃) were examined for the amount of generation of m/z = 28 (CO) and m/z = 44 (CO₂). Figs. 13A and 13B show the obtained analytical graphs. It was known from Figs. 13A and 13B that only the (PE + Al(OH)₃ + NH₄NO₃) system is responsible for the generation of m/z = 28 (CO) and m/z = 44 (CO₂) at around 300°C. It was thus known that a system containing aluminum hydroxide and ammonium nitrate, in particular a resin (PE) containing such two components, can generate m/z = 28 (CO) and m/z = 44 (CO₂) before the resin starts to decompose (500 to 700°C). It should now be noted that m/z = 44 may represents N₂O.

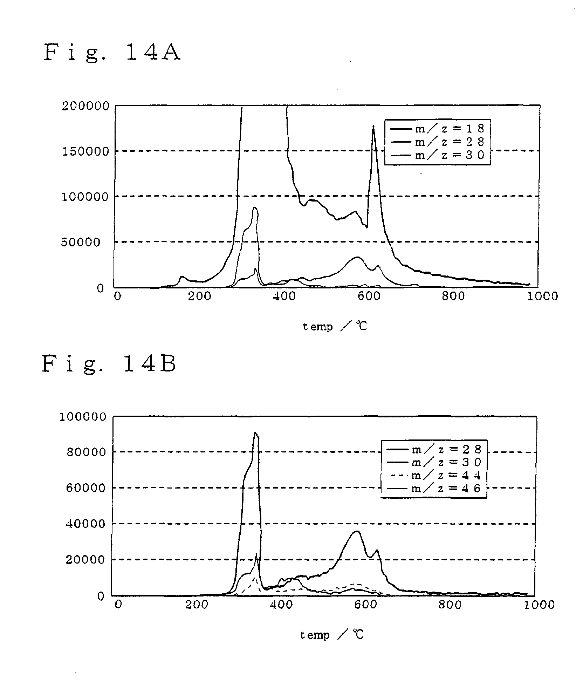

To further analyze generation conditions specific to m/z = 18 (H₂O), m/z = 28 (CO), m/z = 30 (NO), m/z = 44 (CO₂) and m/z = 46 (NO₂), the composition of polyethylene and aluminum hydroxide and ammonium nitrate (PE + Al(OH)₃ + NH₄NO₃) was examined for the amount of generation of such individual gases. Figs. 14A and 14B show the obtained analytical graphs. The abscissa denotes temperature and the ordinate denotes spectral intensity. It was known from Figs. 14A and 14B that m/z = 18 (H₂O), m/z = 28 (CO), m/z = 30 (NO), m/z = 44 (CO₂) and m/z = 46 (NO₂) were found to generate at around 300 to 350°C almost at the same time. It was thus known that a system containing the composition comprising polyethylene and aluminum hydroxide and ammonium nitrate can generate m/z = 18 (H₂O), m/z = 28 (CO), m/z = 30 (NO), m/z = 44 (CO₂) and m/z = 46 (NO₂) almost at the same time before the resin starts to decompose (500 to 700°C). It should now be noted that m/z = 44 may represents N₂O. It is to be noted that NO₂ generates only in a small amount and is thus difficult to be confirmed on the spectral basis.

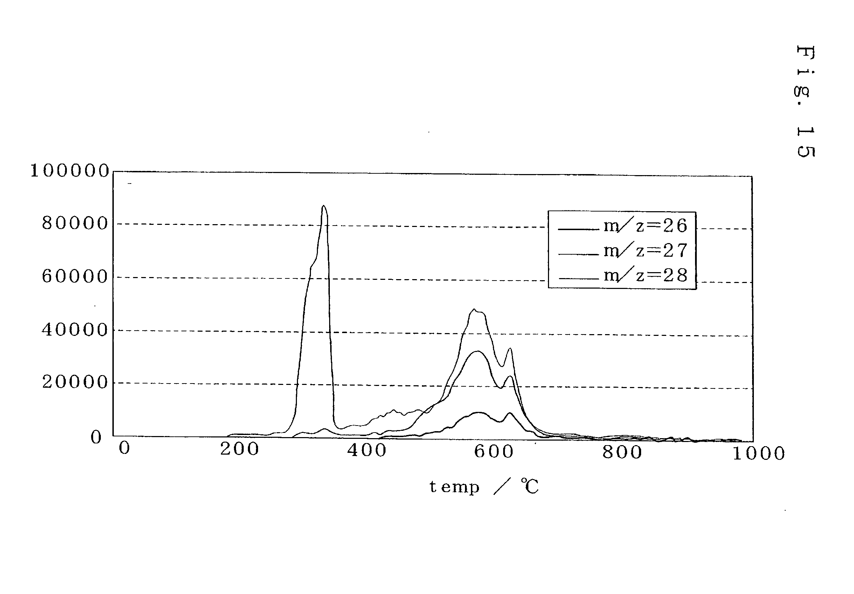

Next, to identify gas component of m/z = 28 generated at around 300°C, components ascribable to m/z = 26 to 28 of the (PE + Al(OH)₃ + NH₄NO₃) system were examined by the TDS measurement. Fig. 15 shows an obtained graph. The abscissa denotes temperature and the ordinate denotes spectral intensity. Fig. 15 suggested that m/z = 28 observed at around 300°C is not ascribable at least to C₂H₄, but to CO in consideration of the constituents and the fact that neither m/z = 26 nor 27 (corresponded to C₂H₂ and C₂H₃, respectively) was observed.

From these findings, the composition of polyethylene and aluminum hydroxide and ammonium nitrate (PE + Al(OH)₃ + NH₄NO₃) can sharply emit CO and CO₂ at around 300 to 350°C, which suggests that oxidative decomposition of polyethylene can proceed before the combustion (500 to 700°C) occurs. Since H20, NO and NO₂ (also N₂O may be included) were found to generate almost at the same time with CO and CO₂, it is supposed that HNO₃ generated from H₂O, NO and NO₂ instantaneously decomposes polyethylene.

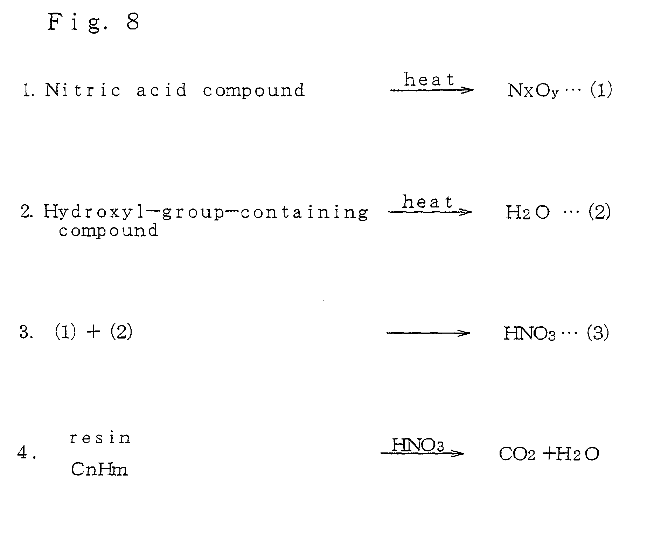

More specifically, as shown in Fig. 8, the nitric acid compound, which is one component of the combustion-inhibitory oxidative decomposition accelerator contained in the flame-retardant material of the present invention, produces NₓO_{y} (**1**) upon heating. On the other hand, the hydroxyl-group-containing compound, which is another component of the combustion-inhibitory oxidative decomposition accelerator, generates H₂O (**2**). Such (**1**) and (**2**) generated upon heating react with each other to produce HNO₃, and which HNO₃ acts as an oxidant for oxidatively decomposing the resin (CₙHₘ). The oxidative decomposition is not accompanied by flame, and can proceed at a temperature lower than the combustion temperature of the resin. So that the flame-retardant material of the present invention containing such combustion-inhibitory oxidative decomposition accelerator can exhibit flame retardancy. The temperature whereat HNO₃ generates depends on the decomposition temperature of the nitric acid compound and hydroxyl-group-containing compound. That is, temperature whereat the resin decomposes can be determined to some arbitrary degree by properly selecting combination of the nitric acid compound and hydroxyl-group-containing compound. Flame retardancy will successfully given to the resin only when a temperature whereat HNO₃ generates is set lower than the decomposition temperature of the resin. In other words, when the nitric acid compound and hydroxyl-group-containing compound are properly combined so as to ensure a decomposition temperature lower than the combustion temperature of the target resin and then added to the resin, such resin is oxidatively decomposed before it burns in flame. This is why the flame retardancy is attained. The hydroxyl-group-containing compound may contain crystal water, or can be replaced with a hydrated compound.

The next effort was directed to identify the decomposition products through TG-MS measurement. The gases emitted when the foregoing composition comprising polyethylene and aluminum hydroxide and ammonium nitrate (PE + Al(OH)₃ + NH₄NO₃) was thermally decomposed in the TG-DTA apparatus were measured *in situ* by GC/MS measurement.

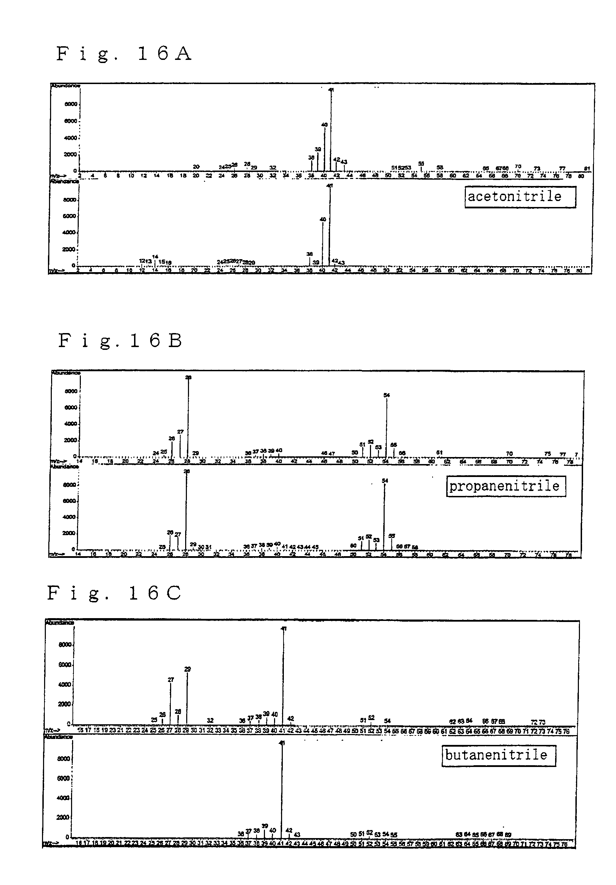

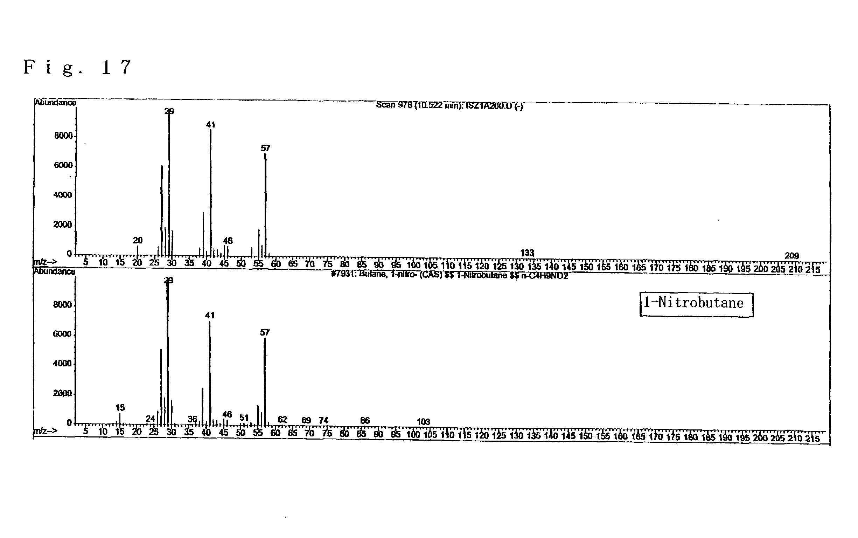

The first TG-MS measurement was carried out in a He atmosphere in order to identify the decomposition products generated at 300°C. Results were shown in Figs. 16A to 16C. In each of Figs. 16A to 16C, the upper chart shows a spectrum obtained from the actual measurement, and the lower chart shows a reference spectrum stored in a computer, which is used for comparison with the actual spectrum to thereby allow identification of the decomposition products. It was made clear from Figs. 16A to 16C that the decomposition products generated when the ternary composition (PE + Al(OH)₃ + NH₄NO₃) was heated at 300°C include at least nitrile compounds, which are detailed as acetonitrile (Fig. 16A), propanenitrile (Fig. 16B) and butanenitrile (Fig. 16C). Similar TG-MS measurement in order to identify the decomposition products generated at 300°C in an atmosphere containing 20% of O₂ (simulated air) revealed that, as shown in Fig. 17, the decomposition products include at least nitro compound, which is detailed as 1-nitrobutane. Also in Fig. 17, the upper chart shows an actually measured spectrum and the lower chart shows a reference spectrum, similarly to Figs. 16A to 16C. Note that, in Figs. 16A to 16C and 17, the abscissa denotes m/z and the ordinate denotes spectral intensity.

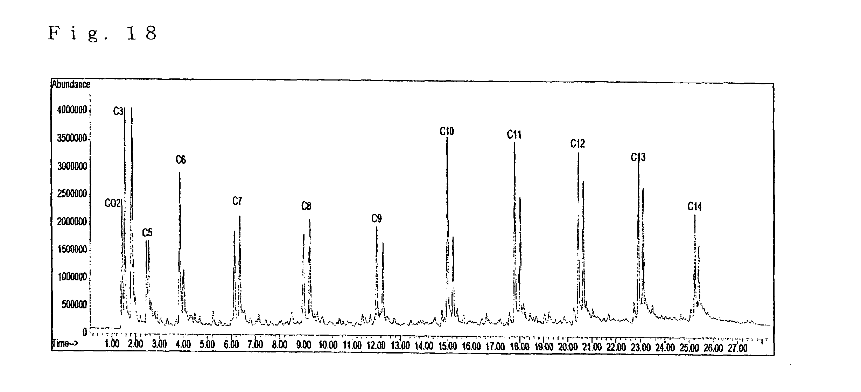

On the other hand, similar TG-MS measurement of the decomposition products generated at 480°C revealed that, as shown in Fig. 18, the decomposition products mainly comprise hydrocarbons, which were found as similar to those contained in a decomposition peak of polyethylene observed at around 480°C. It was made clear from these results that the decomposition reaction occurs at around 300°C, whereat the nitrile and nitro compounds are generated from polyethylene, is absolutely different from the combustive degradation at around 480°C.

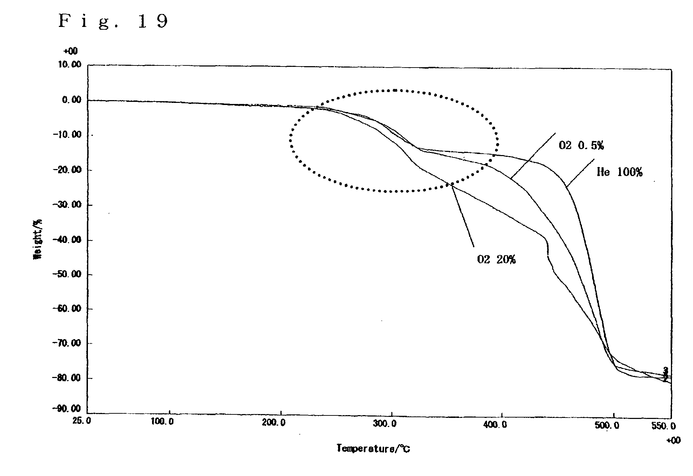

Weight changes during the temperature elevation were then measured individually in a He atmosphere and O₂ atmosphere. Results were shown in Fig. 19, where the abscissa denotes temperature and the ordinate denotes weight change. It was made clear that presence of O₂ accelerated weight reduction due to oxidative decomposition at around 250 °C and thereafter (which is referred to as combustion-inhibitory oxidative decomposition).

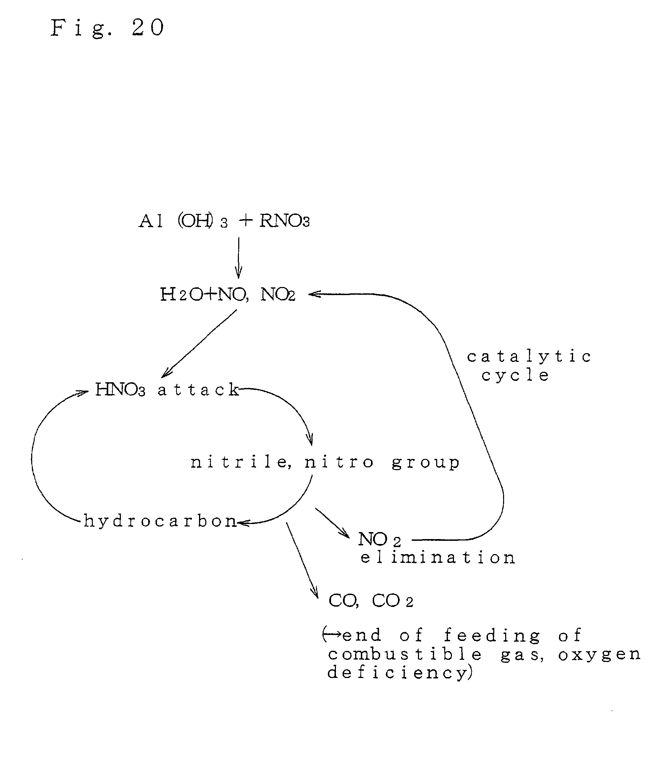

Based on the findings from the TDS and TG-MS measurements, the exhibition mechanism of the flame retardancy of the flame-retardant material according to the present invention can be explained as follows . That is, as shown in Fig. 20, aluminum hydroxide and nitric acid compound (ammonium nitrate) decompose upon heating (at around 300°C) to generate H₂O, NO and NO₂ (also N₂O may be contained) , which products further react with each other to produce HNO₃. The resultant HNO₃ oxidatively decomposes the resin such as polyethylene to thereby exhibit the flame retardant effect. During such decomposition process, NO₂ is eliminated, and CO and CO₂ are produced. It is supposed that the eliminated NO₂ again reacts with H₂O released from aluminum hydroxide to produce HNO₃, which can be understood as a catalytic cycle. The flame-retardant material of the present invention thus can exhibit a sufficient level of flame retardancy by adding a relatively small amount of nitric acid compound to aluminum hydroxide. More specifically, an excellent flame retardancy can be attained by adding approx. 1 to 50 weight parts, and more preferably approx. 3 to 20 weight parts of nitric acid compound to 100 weight parts of aluminum hydroxide. Decomposition residues, which remained in a form of short-chain hydrocarbons without being degraded to as small as CO or CO₂, are supposed to be repetitively decomposed by the regenerated HNO₃ so as to finally produce CO and CO₂. The generation of CO or CO₂ will reduce supply of combustible gas (O₂) to thereby produce a combustion-inhibitory atmosphere, which is responsible for an excellent flame retardant effect.

It is to be noted that expression of "principal component" or "mainly comprising" was used to specify a component which accounts for a largest content on a weight basis unless otherwise than as specifically described.

## Claims

1. A flame-retardant material used for ensuring a target object, which mainly comprises a polymer material, flame retardancy as being dispersed therein or immobilized on the surface thereof,
wherein the flame-retardant material contains a group expressed as NₓO_{y} (where, x and y are natural numbers) and a group capable of generating water upon heating.

2. The flame-retardant material according to Claim 1, wherein the group expressed as NₓO_{y} (where, x and y are natural numbers) is contained in a form of a compound selected from the group consisting of nitric acid compound, nitrous acid compound and hyponitrous acid compound.

3. The flame-retardant material according to Claim 2, wherein the nitric acid compound, nitrous acid compound and hyponitrous acid compound have non-metallic nature.

4. The flame-retardant material according to Claim 2, wherein the nitric acid compound, nitrous acid compound and hyponitrous acid compound are subjected to surface treatment for improving the affinity with the target object.

5. The flame-retardant material according to Claim 4, wherein the surface treatment is given by using any one agent selected from the group consisting of those of Si-base, Ti-base, Al-base, olefin-base, aliphatic acid-base, oil-and-fat-base, wax-base and detergent-base.

6. The flame-retardant material according to Claim 4, wherein the surface treatment is coating with a vitreous precursor composition capable of generating vitreous ceramic upon heating onto such nitric acid compound, nitrous acid compound and hyponitrous acid compound.

7. The flame-retardant material according to Claim 1, wherein the group capable of generating water upon heating is contained in a form of a hydroxyl-group-containing compound.

8. The flame-retardant material according to Claim 7, wherein the hydroxyl-group-containing compound is a metal hydroxide.

9. The flame-retardant material according to Claim 8, wherein the metal hydroxide mainly comprises any compound selected from the group consisting of aluminum hydroxide, magnesium hydroxide and calcium hydroxide.

10. A flame-retardant material used for ensuring a target object, which mainly comprises a polymer material, flame retardancy as being dispersed therein or immobilized on the surface thereof,
wherein the flame-retardant material contains a compound selected from the group consisting of nitric acid compound, nitrous acid compound and hyponitrous acid compound, together with a hydroxyl-group-containing compound.

11. The flame-retardant material according to Claim 10, wherein the hydroxyl-group-containing compound is a metal hydroxide.

12. The flame-retardant material according to Claim 11, wherein the metal hydroxide mainly comprises at least any one compound selected from the group consisting of aluminum hydroxide, magnesium hydroxide and calcium hydroxide.

13. The flame-retardant material according to Claim 10, wherein the nitric acid compound, nitrous acid compound and hyponitrous acid compound have non-metallic nature.

14. A flame-retardant material used for ensuring a target object, which mainly comprises a polymer material, flame retardancy as being dispersed therein or immobilized on the surface thereof,
wherein the flame-retardant material contains a compound selected from the group consisting of nitric acid compound, nitrous acid compound and hyponitrous acid compound, together with a compound having a hydroxyl group and a crystal water.

15. A flame-retardant polymer material having a matrix comprising a polymer material having dispersed therein a flame-retardant material which contains a group expressed as NₓO_{y} (where, x and y are natural numbers) and a group capable of generating water upon heating.

16. A flame-retardant polymer material having a matrix comprising a polymer material having immobilized on the surface thereof a flame-retardant material which contains a group expressed as NₓO_{y} (where, x and y are natural numbers) and a group capable of generating water upon heating.

17. A flame-retardant polymer material having a matrix comprising a polymer material having dispersed therein a flame-retardant material which contains a compound selected from the group consisting of nitric acid compound, nitrous acid compound and hyponitrous acid compound, together with a hydroxyl-group-containing compound.

18. A flame-retardant polymer material having a matrix comprising a polymer material having immobilized on the surface thereof a flame-retardant material which contains a compound selected from the group consisting of nitric acid compound, nitrous acid compound and hyponitrous acid compound, together with a hydroxyl-group-containing compound.

19. A flame-retardant material used for ensuring a target object, which mainly comprises a polymer material, flame retardancy as being dispersed therein or immobilized on the surface thereof,
wherein the flame-retardant material contains a combustion-inhibitory oxidative decomposition accelerator which oxidatively decomposes such polymer material upon heating to thereby ensure such target object combustion-inhibitory property.

20. The flame-retardant material according to Claim 19, wherein the combustion-inhibitory oxidative decomposition accelerator is at least one compound selected from the group consisting of nitric acid, nitric acid compound, permanganate, chromic acid, chromic acid compound, peroxide, salt of peroxoacid, salt of sulfuric acid, oxygen-base substance and oxide.

21. The flame-retardant material according to Claim 19, wherein the combustion-inhibitory oxidative decomposition accelerator contains a nitrogen compound and a hydroxyl-group-containing compound.

22. The flame-retardant material according to Claim 21, wherein the target object is given with the flame retardancy through a process in which, at the combustion temperature of the polymer material or at a lower temperature than such combustion temperature, nitrogen oxide generated from the nitrogen compound and water generated from the hydroxyl-group-containing compound react with each other to produce nitric acid, and such nitric acid denatures the polymer material by thermal oxidation to produce non-combustible components such as CO₂ and H₂O.

23. The flame-retardant material according to Claim 21, wherein the hydroxyl-group-containing compound is a metal hydroxide, and the nitrogen compound is a nitric acid compound having a decomposition temperature of 50 to 600°C.

24. A flame-retardant material used for ensuring a target object, which mainly comprises a polymer material, flame retardancy as being dispersed therein or immobilized on the surface thereof,
wherein the flame-retardant material contains a combustion-inhibitory oxidative decomposition accelerator which oxidatively decomposes such polymer material at the combustion temperature of the polymer material or at a lower temperature than such combustion temperature to thereby ensure such target object combustion-inhibitory property.

25. The flame-retardant material according to Claim 24, wherein the combustion-inhibitory oxidative decomposition accelerator oxidatively decomposes the polymer material at the combustion temperature of the polymer material or at a lower temperature than such combustion temperature to produce non-combustible components such as CO₂ and H₂O.

26. The flame-retardant material according to Claim 24, wherein the combustion-inhibitory oxidative decomposition accelerator contains at least one compound selected from the group consisting of nitric acid, nitric acid compound, permanganate, chromic acid, chromic acid compound, peroxide, salt of peroxoacid, salt of sulfuric acid, oxygen-base substance and oxide.

27. The flame-retardant material according to Claim 24, wherein the combustion-inhibitory oxidative decomposition accelerator contains a nitrogen compound and a hydroxyl-group-containing compound.

28. The flame-retardant material according to Claim 27, wherein the nitrogen compound is a compound selected from the group consisting of metal nitrate, nitric acid ester and ammonium nitrate.

29. The flame-retardant material according to Claim 27, wherein the target object is given with the flame retardancy through a process in which, at the combustion temperature of the polymer material or at a lower temperature than such combustion temperature, nitrogen oxide generated from the nitrogen compound and water generated from the hydroxyl-group-containing compound react with each other to produce nitric acid, and such nitric acid denatures the polymer material by thermal oxidation to produce non-combustible components such as CO₂ and H₂O.

30. A flame-retardant polymer material mainly comprising a polymer component, wherein such flame-retardant polymer material shows in a spectrum of TDS analysis (thermal decomposition spectroscopy) *in vacuo* a peak attributable to a combustion-related gas component generated within a combustion temperature range of the polymer component, and a peak attributable to a combustion-inhibitory gas component containing at least a group expressed by COₓ (x is a natural number) and generated within a temperature range lower than the combustion temperature range of the polymer component.

31. A flame-retardant polymer material mainly comprising a polymer component, wherein such flame-retardant polymer material shows a spectrum of TDS analysis (thermal decomposition spectroscopy) *in vacuo* in which
a peak profile attributable to a combustible gas component generated by decomposition reaction of the polymer component; and
a peak profile attributable to a non-combustible gas component generated as a decomposition product of the polymer component within a temperature range lower than that responsible for the start of the generation of such combustible gas component.
